# EUROPEAN PATENT APPLICATION

(11) **EP 4 841 875 A1**
(43) Date of publication of application: **18.11.2026**
(21) Application number: 26178792.3
(22) Date of filing: 14.05.2026
(51) Int. Cl.: H02M 1/12, H01F 3/10, H02M 1/00, H02M 1/42, H02M 7/219

(54) **RECTIFIER**

(30) Priority: 14.05.2025 US 202563805351 P
(71) Applicant: Delta Electronics, Inc., Taipei 114501 (TW)
(72) Inventor: Guo, Zhehui, Morrisville, NC, 27560 (US); Phukan, Ripun, Morrisville, NC, 27560 (US); Kumar, Misha, Morrisville, NC, 27560 (US); Barbosa, Peter Mantovanelli, 320023 Taoyuan City (TW); Chen, Miaoyun, 320023 Taoyuan City (TW)
(74) Representative: Petraz, Gilberto Luigi

(57) **Abstract**

A rectifier (1), including: an output capacitor (Cₒ); a first high frequency (HF) bridge leg (B1), a second HF bridge leg (B3), and a line frequency (LF) bridge leg (B3) all connected to the output capacitor (Cₒ) in parallel; a first inductor (L_{g1}) connected between an input end (P1) and a middle end (P2) of the first HF bridge leg (B1); a second inductor (L_{g2}) connected between the input end (P1) and a middle end (P3) of the second HF bridge leg (B2); a first branch inductor (L_{b1}) and a second branch inductor (L_{b2}) connected in series between the middle end (P2) of the first HF bridge leg (B1) and the middle end (P3) of the second HF bridge leg (B2); a branch capacitor (C_{b}) connected between a middle end (P5) of the first branch inductor (L_{b1}) and the second branch inductor (L_{b2}) and a middle end (P4) of the LF bridge leg (B3); a first core (C1) coupling between the first inductor (L_{g1}) and the first branch inductor (L_{b1}); and a second core (C2) coupling between the second inductor (L_{g2}) and the second branch inductor (Lb2).

## Description

### FIELD

The disclosure relates to a rectifier. More particularly, the present disclosure relates to a rectifier with coupled inductors under coupling conditions.

### BACKGROUND

Conventional iTCM operation is a technique that separates high-frequency and low-frequency current components into branch and grid inductors, respectively. This separation allows for the dedicated and optimized designs of inductors to minimize losses and reduce volume based on the specific characteristics of each current component. However, in practical designs, the grid inductance cannot be made excessively large due to volume constraints in high power density applications. This results in the presence of residual high-frequency currents, which, in turn, lead to significant core losses when high-saturation-flux-density (high-Bsat) magnetic cores are used, particularly at high switching frequencies. These core losses degrade system efficiency, increase the thermal management requirements, and dimmish the power density benefits associated iTCM operation. Furthermore, with the increasing demand for higher power density, high-frequency operation in iTCM totem-pole PFC rectifiers often leads to the presence of input current ripple spreading across a wide frequency range, causing electromagnetic interference across that same broad spectrum. The presence of EMI increases the losses and sizes of EMI filters, further degrading the overall performance of the power conversion system.

Triangular current mode (TCM) power factor correction (PFC) rectifiers are well known for their soft-switching advantages, achieving higher efficiencies and showing strong potential for high power density applications. However, in conventional TCM PFC rectifier designs, the TCM PFC inductors must simultaneously handle both the low-frequency (60 Hz) AC component and a broadband high-frequency (HF) ripple current component. This mixed-frequency stress severely complicates the optimization of inductor design, making it difficult to strike an effective balance between saturation flux density limitations and core loss performance (related to the alternating flux density). As a result, the TCM PFC inductors often become bulky and lossy, preventing the expected improvements in efficiency and power density.

For totem-pole PFC applications, iTCM without magnetic coupling has been applied into two-phase interleaved architectures. This approach reduces the current stress on the auxiliary capacitor through interleaving, improves the system overall power capability, distributes thermal hotspots to simplify cooling design, and decreases input current ripple through interleaving. Nevertheless, part of high frequency ripples still remains in the grid current. The EMI filter design must still account for this differential-mode current ripple, sometimes necessitating additional differential-mode inductors or utilizing the leakage inductance of common-mode chokes for ripple suppression. To suppress grid inductor current ripple and resultant EMI noises, increasing the inductance of grid inductor is a conventional approach, but it inevitably results in larger inductor size and higher winding losses.

Prior arts provide integrated magnetic structures that do not provide a practical solution for achieving the optimal magnetic coupling conditions required for realizing near-zero input current ripple in a compact and efficient design.

### SUMMARY

An object of the present application is to provide a rectifier to solve the issues of prior art.

To achieve the above-mentioned objects, the present application provides a rectifier, including: an input end; an output capacitor; a first high frequency (HF) bridge leg, a second HF bridge leg, and a line frequency (LF) bridge leg all connected to the output capacitor in parallel; a first inductor connected between the input end and a middle end of the first HF bridge leg; a second inductor connected between the input end and a middle end of the second HF bridge leg; a first branch inductor and a second branch inductor connected in series between the middle end of the first HF bridge leg and the middle end of the second HF bridge leg; a branch capacitor connected between a middle end of the first branch inductor and the second branch inductor and a middle end of the LF bridge leg; a first core coupling between the first inductor and the first branch inductor; and a second core coupling between the second inductor and the second branch inductor.

Optionally, in one embodiment of the disclosure, a mutual inductance between the first inductor and the first branch inductor is substantially equal to an inductance of the first branch inductor, and a mutual inductance between the second inductor and the second branch inductor is substantially equal to an inductance of the second branch inductor.

Optionally, in one embodiment of the disclosure, the first HF bridge leg and the second HF bridge leg substantially are or close to 180° in phase, the first HF bridge leg includes a first switch and a second switch connected in series and operated in complementary manner, and the second HF bridge leg includes a third switch and a fourth switch connected in series and operated in complementary manner.

Optionally, in one embodiment of the disclosure, the LF bridge leg includes two switches connected in series and operated in complementary manner.

Optionally, in one embodiment of the disclosure, the first core and the second core include low-loss magnetic material.

Optionally, in one embodiment of the disclosure, the rectifier is configured as an integrated triangular current mode (iTCM) totem-pole power factor correction (PFC) rectifier.

Optionally, in one embodiment of the disclosure, the first core includes a first center leg and a second center leg connected to the first center leg, the first inductor includes a first sub-winding with Ng1 turns wound around the first center leg and a second sub-winding with Ng2 turns wound around the second center leg, the first branch inductor includes a first sub-branch winding with Nb1 turns wound around the first center leg and a second sub-branch winding with Nb2 turns wound around the second center leg, wherein Ng1 is not equal to Ng2, and Nb1 is not equal to Nb2.

Optionally, in one embodiment of the disclosure, the second core includes a first center leg and a second center leg connected to the first center leg, the second inductor includes a first sub-winding with Ng1 turns wound around the first center leg of the second core and a second sub-winding with Ng2 turns wound around the second center leg of the second core, the second branch inductor includes a first sub-branch winding with Nb1 turns wound around the first center leg of the second core and a second sub-branch winding with Nb2 turns wound around the second center leg of the second core.

Optionally, in one embodiment of the disclosure, the first center leg of the first core and the first center leg of the second core are disposed in a first axis, the second center leg of the first core and the second center leg of the second core are disposed in a second axis, and the first axis and the second axis are disposed side by side and parallel to each other.

Optionally, in one embodiment of the disclosure, a bottom yoke of the first core and a top yoke of the second core are integral part.

Optionally, in one embodiment of the disclosure, the first core further includes a side leg, and the second core further includes a side leg.

Optionally, in one embodiment of the disclosure, each one of the first center leg of the first core, the first center leg of the second core, the second center leg of the first core, and the second center leg of the second core is provided with an air gap.

Optionally, in one embodiment of the disclosure, the first sub-winding of the first inductor, the first sub-branch winding of the first branch inductor, the first sub-winding of the second inductor, and the first sub-branch winding of the second branch inductor have a first winding direction.

Optionally, in one embodiment of the disclosure, the second sub-winding of the first inductor, the second sub-branch winding of the first branch inductor, the second sub-winding of the second inductor, and the second sub-branch winding of the second branch inductor have a second winding direction opposite to the first winding direction.

Optionally, in one embodiment of the disclosure, the rectifier further includes a third inductor connected to the first inductor and the second inductor, wherein an inductance of the first inductor is substantially equal to an inductance of the first branch inductor, and an inductance of the second inductor is substantially equal to an inductance of the second branch inductor.

Optionally, in one embodiment of the disclosure, the rectifier further includes a third core coupling to the third inductor, wherein the first core and the second core include low-loss magnetic material, and the third core includes high saturation magnetic field material.

Optionally, in one embodiment of the disclosure, the first core includes a center leg, a top yoke, a bottom yoke, and a side leg connected to the top yoke and the bottom yoke, the second core includes a center leg, a top yoke, a bottom yoke, and a side leg connected to the top yoke and the bottom yoke, the top yokes of the first core and the second core are integral part, the bottom yokes of the first core and the second core are integral part, the center legs of the first core and the second core are disposed side by side and parallel to each other.

Optionally, in one embodiment of the disclosure, both the center legs of the first core and the second core are provided with an air gap.

Optionally, in one embodiment of the disclosure, the first core includes a center leg, a top yoke, a bottom yoke, and a side leg connected to the top yoke and the bottom yoke, the second core includes a center leg, a top yoke, a bottom yoke, and a side leg connected to the top yoke and the bottom yoke, the bottom yoke of the first core and the top yoke of the second core are integral part, the center legs of the first core and the second core are disposed co-axial.

Optionally, in one embodiment of the disclosure, numbers of turns of winding of the first inductor and the first branch inductor are identical, and numbers of turns of winding of the second inductor and the second branch inductor are identical.

Optionally, in one embodiment of the disclosure, windings of the first inductor and the first branch inductor are bifilar winding or sandwich winding, and windings of the second inductor and the second branch inductor are bifilar winding or sandwich winding.

Optionally, in one embodiment of the disclosure, the rectifier further includes an electro-magnetic interference (EMI) filter connected between the input end and the middle end of the LF bridge leg, wherein the EMI filter includes a common-mode choke and a differential-mode inductor, a coupling factor of the common-mode choke is unity, and the differential-mode inductor is configured as a third inductor.

Optionally, in one embodiment of the disclosure, the rectifier further includes an electro-magnetic interference (EMI) filter connected between the input end and the middle end of the LF bridge leg, wherein the EMI filter includes a common-mode choke, a coupling factor of the common-mode choke is less than unity, and a leakage inductance of the common-mode choke is configured as a third inductor.

Optionally, in one embodiment of the disclosure, the rectifier further includes a third inductor connected to the first inductor in series and a fourth inductor connected to the second inductor in series, wherein an inductance of the first inductor is substantially equal to an inductance of the first branch inductor, and an inductance of the second inductor is substantially equal to an inductance of the second branch inductor.

Optionally, in one embodiment of the disclosure, the rectifier further includes a third core coupling to the third inductor, and a fourth core coupling to the fourth inductor, wherein the first core and the second core include low-loss magnetic material, and the third core and the fourth core include high saturation magnetic field material.

Optionally, in one embodiment of the disclosure, the first core includes a center leg, a top yoke, a bottom yoke, and a side leg connected to the top yoke and the bottom yoke, the second core includes a center leg, a top yoke, a bottom yoke, and a side leg connected to the top yoke and the bottom yoke, wherein the third core contact the top yoke of the first core, the fourth core contact the top yoke of the second core, and wherein the top yokes of the first core and the second core are integral part, the bottom yokes of the first core and the second core are integral part, and the center legs of the first core and the second core are disposed side by side and parallel to each other.

Optionally, in one embodiment of the disclosure, the third core and the first core are disposed co-axial, and wherein the fourth core and the second core are disposed co-axial.

Optionally, in one embodiment of the disclosure, a winding direction of the third inductor, the first inductor, and the first branch inductor is opposite to a winding direction of the fourth inductor, the second inductor, and the second branch inductor.

Optionally, in one embodiment of the disclosure, windings of the first inductor and the first branch inductor are interleaved, and windings of the second inductor and the second branch inductor are interleaved.

Optionally, in one embodiment of the disclosure, the first core includes a center leg, a top yoke, a bottom yoke, and a side leg connected to the top yoke and the bottom yoke, the second core includes a center leg, a top yoke, a bottom yoke, and a side leg connected to the top yoke and the bottom yoke, wherein the third core contact the top yoke of the first core, the fourth core contact the top yoke of the second core, and wherein the bottom yoke of the first core and the bottom yoke of the second core are integral part, and the center legs of the first core and the second core are disposed co-axial.

Optionally, in one embodiment of the disclosure, the third core, the first core, the fourth core, and the second core are disposed co-axial.

Optionally, in one embodiment of the disclosure, a winding direction of the third inductor, the first inductor, and the first branch inductor is identical to a winding direction of the fourth inductor, the second inductor, and the second branch inductor.

Optionally, in one embodiment of the disclosure, windings of the first inductor and the first branch inductor are interleaved, and windings of the second inductor and the second branch inductor are interleaved.

Optionally, in one embodiment of the disclosure, the third core includes a center leg, a side leg, and a top yoke connected to the center leg and the side leg, and the fourth core includes a center leg, a side leg, and a top yoke connected to the center leg and the side leg.

Optionally, in one embodiment of the disclosure, the third inductor and the fourth inductor are configured to coupling to each other.

Optionally, in one embodiment of the disclosure, the rectifier further includes a fifth core includes a first center leg and a second center leg connected to the first center leg, wherein the third inductor is wound around the first center leg, and the fourth inductor is wound around the second center leg.

Optionally, in one embodiment of the disclosure, the fifth core includes high saturation magnetic field material.

Optionally, in one embodiment of the disclosure, the first core includes a center leg, a top yoke, a bottom yoke, and a side leg connected to the top yoke and the bottom yoke, the second core includes a center leg, a top yoke, a bottom yoke, and a side leg connected to the top yoke and the bottom yoke, wherein the fifth core contacts the top yoke of the first core and the top yoke of the second core, and wherein the top yokes of the first core and the second core are integral part, the bottom yokes of the first core and the second core are integral part, and the center legs of the first core and the second core are disposed side by side and parallel to each other..

Optionally, in one embodiment of the disclosure, the first center leg of the fifth core and the first core are disposed co-axial, and wherein the second center leg of the fifth core and the second core are disposed co-axial

Optionally, in one embodiment of the disclosure, a winding direction of the third inductor, the first inductor, and the first branch inductor is opposite to a winding direction of the fourth inductor, the second inductor, and the second branch inductor.

Optionally, in one embodiment of the disclosure, windings of the first inductor and the first branch inductor are interleaved, and windings of the second inductor and the second branch inductor are interleaved.

Compared to prior art, the disclosure addresses these challenges by proposing a rectifier featuring magnetic coupling condition and compact magnetic integration approaches, achieving nearly zero input current ripple, substantially reducing EMI noise, minimizing magnetic material usage, and greatly improving power density and overall system efficiency.

### BRIEF DESCRIPTION OF DRAWINGS

FIG. 1 illustrates a rectifier topology with uncoupled inductors according to an embodiment of the disclosure.
FIGS. 2(a) to 2(d) depict the switching pattern for the rectifier in FIG. 1.
FIG. 3 presents a schematic diagram of a rectifier according to an embodiment of the disclosure.
FIGS. 4(a) to 4(d) illustrates the switching pattern of the proposed approximately zero input-current-ripple two-phase interleaved iTCM totem-pole PFC rectifier.
FIGS. 5(a) to 5(b) plot the equivalent inductance of L_{g} and the current ripple ratio of the first inductor and the second inductor under different magnetic coupling factors.
FIGS. 6(a) to 6(b) provides simulation waveforms demonstrating the ripple-free current characteristic in the proposed topology under the optimal coupling conditions.
FIG. 7(a) provides an example magnetic integration design with an asymmetric winding arrangement for achieving magnetic coupling in one single core.
FIG. 7(b) shows the corresponding magnetic equivalent circuit for the design illustrated in FIG. 7(a).
FIGS. 7(c) to 7(d) illustrate detailed winding arrangements for achieving positive coupling and flux cancellation in the magnetic core structure provided in FIG. 7(a).
FIG. 8 presents a schematic diagram of another rectifier according to an embodiment of the disclosure.
FIG. 9(a) illustrates an example hybrid magnetic integration structure for the embodiment shown in FIG. 8.
FIG. 9(b) shows the corresponding magnetic equivalent circuit for the structure illustrated in FIG. 9(a).
FIGS. 9(c) to 9(d) depict the detailed winding arrangement for the structure shown in FIG. 9(a) for achieving flux cancellation within the hybrid magnetic core structure.
FIG. 10(a) illustrates another example hybrid magnetic integration structure based on the embodiment described in FIG. 8.
FIG. 10(b) shows the corresponding magnetic equivalent circuit for the structure illustrated in FIG. 10(a).
FIGS. 10(c) to 10(d) depict the detailed winding arrangement for the structure shown in FIG. 10(a) for achieving flux cancellation within the hybrid magnetic core structure.
FIG. 11 illustrates a schematic diagram of another rectifier according to an embodiment of the disclosure.
FIG. 12(a) shows an example magnetic structure implementing the hybrid magnetic integration described in FIG. 11.
FIG. 12(b) presents the corresponding magnetic equivalent circuit for the structure in FIG. 12(a).
FIGS. 12(c) to 12(d) depict detailed winding arrangements and flux cancellation configurations for the structure in FIG. 12(a).
FIG. 13 illustrates a schematic diagram of another rectifier according to an embodiment of the disclosure.
FIG. 14 presents a schematic diagram of another rectifier according to an embodiment of the disclosure.
FIG. 15 illustrates a schematic diagram of a rectifier according to another embodiment of the disclosure.
FIG. 16(a) shows an example magnetic integration structure applicable to the embodiments described in FIGS. 13 to 15.
FIG. 16(b) presents the corresponding magnetic equivalent circuit for the structure shown in FIG. 16(a).
FIGS. 16(c) to (e) depict detailed winding arrangements and illustrate flux cancellation techniques.
FIG. 17(a) illustrates another example magnetic integration structure applicable to the alternative embodiments described in FIGS. 13 to 15, differing in magnetic structure.
FIG. 17(b) shows the corresponding magnetic equivalent circuit for the structure in FIG. 17(a).
FIGS. 17(c) to 17(e) present detailed winding arrangements and flux cancellation strategies for the structure illustrated in FIG. 17(a).

### DETAILED DESCRIPTION

In order to make the above and other objects, features, and advantages of the disclosure easier to understand, workable embodiments of the disclosure will be illustrated below and described in detail with reference to the drawings. In addition, in the drawings, structurally similar units are represented by the same reference numerals.

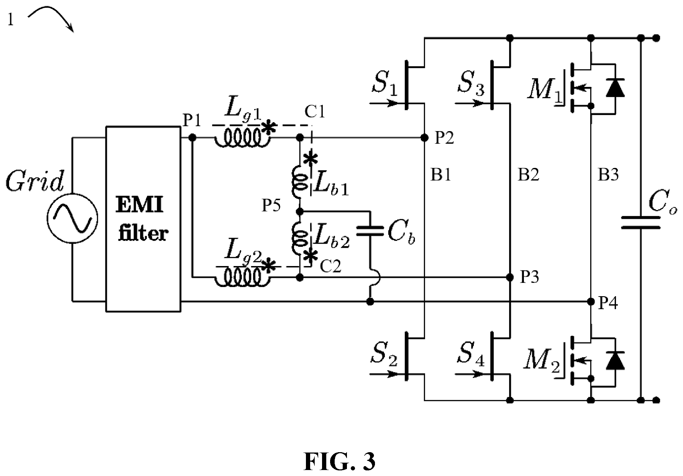

Referring to FIG. 3, FIG. 3 presents a schematic diagram of rectifier according to an embodiment of the disclosure. The present application provides a rectifier 1, including: an input end P1; an output capacitor Cₒ; a first high frequency (HF) bridge leg B1, a second HF bridge leg B2, and a line frequency (LF) bridge leg B3 all connected to the output capacitor Cₒ in parallel; a first inductor L_{g1} connected between the input end P1 and a middle end P2 of the first HF bridge leg B1; a second inductor L_{g2} connected between the input end P1 and a middle end P3 of the second HF bridge leg B2; a first branch inductor L_{b1} and a second branch inductor L_{b2} connected in series between the middle end P2 of the first HF bridge leg B1 and the middle end P3 of the second HF bridge leg B2; a branch capacitor C_{b} connected between a middle end P5 of the first branch inductor L_{b1} and the second branch inductor L_{b2} and a middle end P4 of the LF bridge leg B3; a first core C1 coupling between the first inductor L_{g1} and the first branch inductor L_{b1}; and a second core C2 coupling between the second inductor L_{g2} and the second branch inductor L_{b2}.

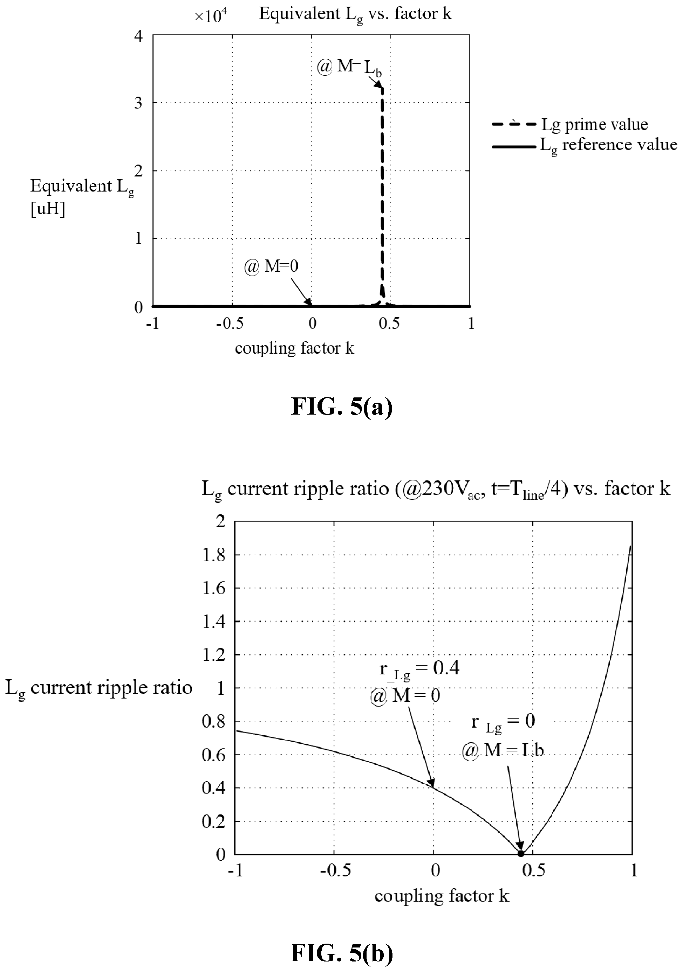

Referring to FIG. 3 and FIG. 5(a), optionally, in one embodiment of the disclosure, an mutual inductance M between the first inductor L_{g1} and the first branch inductor L_{b1} is substantially equal to an inductance L_{b} of the first branch inductor L_{b1}, and an mutual inductance M' between the second inductor L_{g2} and the second branch inductor L_{b2} is substantially equal to an inductance L_{b} of the second branch inductor L_{b2}.

In some embodiments, unlike the traditional two-phase interleaved TCM totem-pole PFC rectifier, this topology introduces two additional first and second branch inductors, L_{b1} and L_{b2}, connected between the midpoints P2 and P3 of the HF bridge legs B1 and B2 and a branch capacitor C_{b}, which is referenced to the neutral line. The L_{b}-C_{b} network effectively decouples the HF and LF current components that were previously mixed within the TCM PFC inductors. Owing to the DC-blocking nature of the branch capacitor C_{b} and the relatively small inductance of the first and second branch inductors L_{b1} and L_{b2}, most HF ripple currents are diverted through the first and second branch inductors L_{b1} and L_{b2}, while the first and second inductors L_{g1} and L_{g2} carry LF current components and a small fraction of HF ripple currents. The ratio of HF ripple current distribution between the first inductor L_{g1} and the first branch inductor L_{b1} or between the second inductor L_{g2} and the second branch inductor L_{b2} is inversely proportional to their respective inductances.

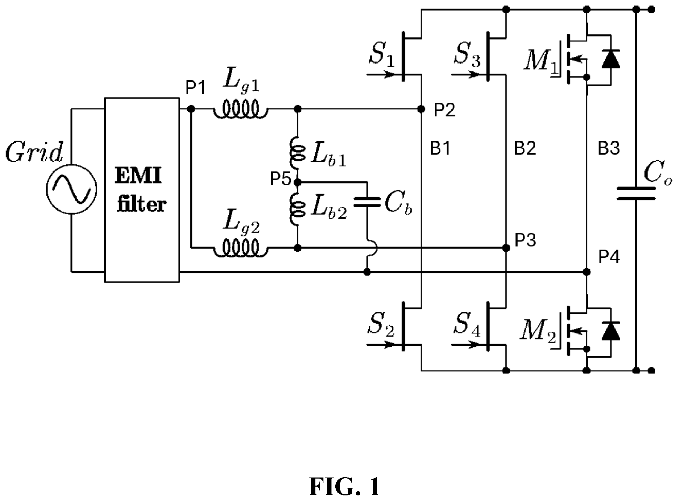

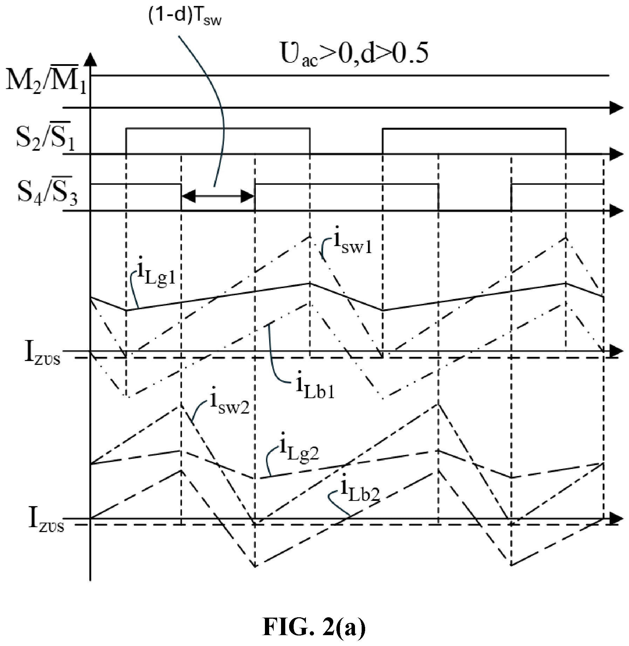

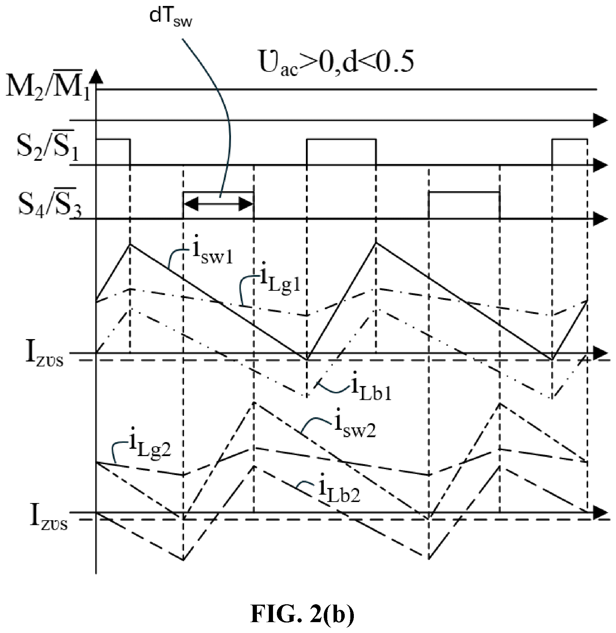

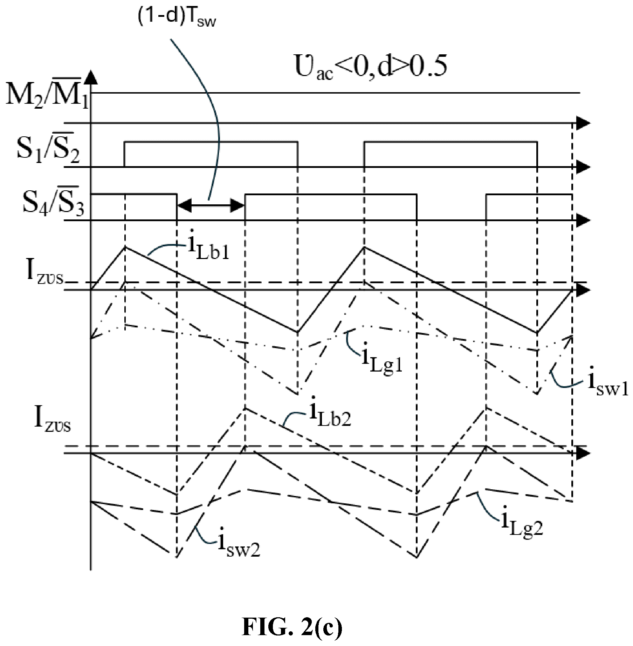

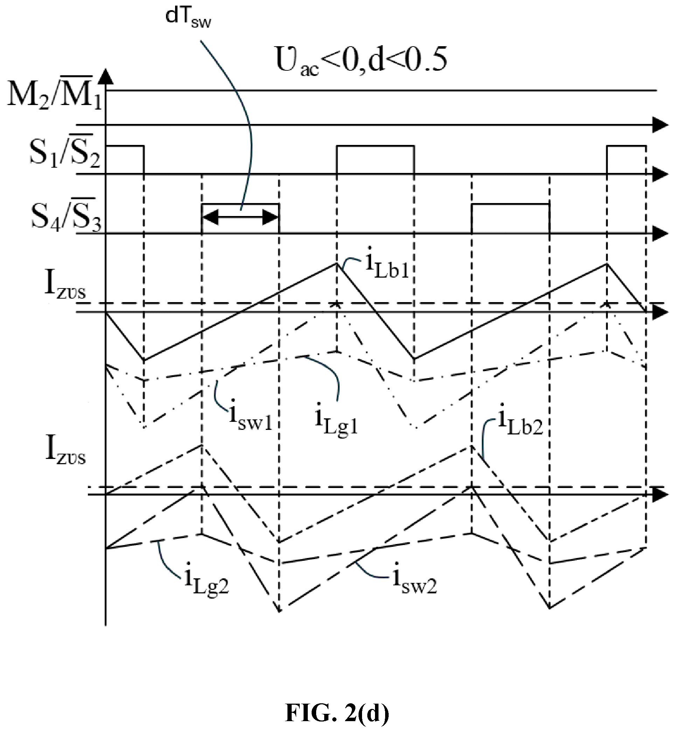

FIGS. 2(a)-2(d) depict the switching patterns of the rectifier in FIG. 1 under four operating conditions: U_{ac} > 0 with d > 0.5; U_{ac} > 0 with d < 0.5; U_{ac} < 0 with d > 0.5; and U_{ac} < 0 with d < 0.5, where U_{ac} denotes the AC input voltage and d represents the duty cycle of the low-side switch (switches S₂ and S₄). Switches S₂ and S₄ serve as main switches during the positive half cycle, while switches S₁ and S₃ assume this role during the negative half cycle. The variable switching frequency, f_{sw}(t), is given by ${f}_{sw} \left(t\right) = \frac{{{u}_{gpk}}^{2} \left|sin\left(wt\right)\right| \left(1-\frac{{u}_{gpk}}{{V}_{o}}\left|sin\left(wt\right)\right|\right)}{2 \left(P\left|sin\left(wt\right)\right|+{I}_{zvs}{u}_{gpk}\right)} \left(\frac{1}{{L}_{g}}+\frac{1}{{L}_{b}}\right)$ (1) where
u_{gpk} is the peak ac grid voltage, Vₒ is the PFC rectifier output voltage, L_{g} is the inductance of the first inductor L_{g1}, and the second inductor L_{g2}, L_{b} is the inductance of the first branch inductor L_{b1} or the second branch inductor L_{b2}, P is the total power rating, and Izvs is the predefined current ensuring approximately zero voltage switching for the main switches.

The current ripple ratio r__{Lg} for the first inductor L_{g1} or the second inductor L_{g2} is determined by the combined effects of the inductance L_{g} and L_{b}, and can be expressed as ${r}_{_ Lg} = \left(2+\frac{{I}_{zvs} {u}_{gpk}}{P}\right) \frac{{L}_{b}}{{L}_{g} + {L}_{b}}$ (2).

As shown in FIGS. 2(a)-2(d), the currents (denoted as i_{sw1} and i_{sw2}) flowing into the midpoint P2 and P3 of the HF bridge legs B1 and B2 remain identical (in a triangular waveform) to those in the conventional TCM PFC rectifier. However, the current separation between the first inductor L_{g1} and the first branch inductor L_{b1} (or between the second inductor L_{g2} and the second branch inductor L_{b2}) enables distinct current profiles, thereby allowing for optimized inductor design. In theory, the first inductor L_{g1} or the second inductor L_{g2} can be physically minimized by employing high-saturation-flux-density (high Bsat) magnetic materials (such as high-flux powder or nanocrystalline) with solid wire windings. However, due to practical volume limitations, the first inductor L_{g1} or the second inductor L_{g2} cannot be made excessively large, and a residual HF currents inevitably remains. Typically, an inductance ratio L_{g}/L_{b} of 5-10 is selected to maintain HF currents within 20%-40% in the first inductor L_{g1} or the second inductor L_{g2}. This residual ripple, however, induces significant core losses for high Bsat magnetic cores at high switching frequencies, compromising system efficiency, increasing thermal management demands, and diminishing the power density advantages of iTCM operation.

FIG. 3 presents the schematic diagram of the proposed rectifier, featuring magnetic coupling between the first inductor L_{g1} and the first branch inductor L_{b1}, as well as the second inductor L_{g2} and the second branch inductor L_{b2}. Compared to the topology shown in FIG. 1, introducing an optimal coupling condition between the first inductor L_{g1} and the first branch inductor L_{b1} or the second inductor L_{g2} and the second branch inductor L_{b2}, such that the mutual inductance M tracks the inductance L_{b} as given in Equation (3), nearly eliminates input current ripple within the first inductor L_{g1} or the second inductor L_{g2}. $M = {L}_{b}$ (3).

This significant reduction in input current ripple dramatically reduces electromagnetic interference (EMI) noises, enabling the use of a smaller differential-mode EMI filter. Furthermore, as shown in Equation (5), L_{g} inductance becomes decoupled from the current ripple constraints, allowing its value to be significantly reduced. Consequently, both the inductance and the physical size of the first inductor L_{g1} or the second inductor L_{g2} can be minimized, leading to an overall reduction in magnetic component volume.

Both the equivalent inductance L_{g}' and the current ripple ratio r_{_Lg}' of the first inductor L_{g1} or the second inductor L_{g2} are functions of the mutual inductance M, expressed in Equation (4) and (5), respectively. ${L}_{g} ′ \left(M\right) = \frac{{L}_{g} {L}_{b} - {M}^{2}}{{L}_{b} - M} ⇒ {L}_{g} ′ = ∞ when M = {L}_{b}$ (4); ${r}_{_ Lg} ′ \left(M\right) = \left(2+\frac{{I}_{zvs} {u}_{gpk}}{P}\right) \frac{\left|{L}_{b}-M\right|}{{L}_{g} + {L}_{b} - 2 M} ⇒ {r}_{_ Lg} ′ = 0 when M = {L}_{b}$ (5).

FIGS. 5(a)-(b) plots the equivalent inductance L_{g}' and the current ripple ratio r_{_Lg}' of the first inductor L_{g1} or the second inductor L_{g2} across varying coupling factors. When mutual inductance M = L_{b}, the equivalent inductance of L_{g}' theoretically approaches infinite, resulting in a complete elimination of current ripple in the first inductor L_{g1} or the second inductor L_{g2}.

In some embodiments, the mutual inductance M may be within a predetermined or workable tolerance of the inductance L_{b}.

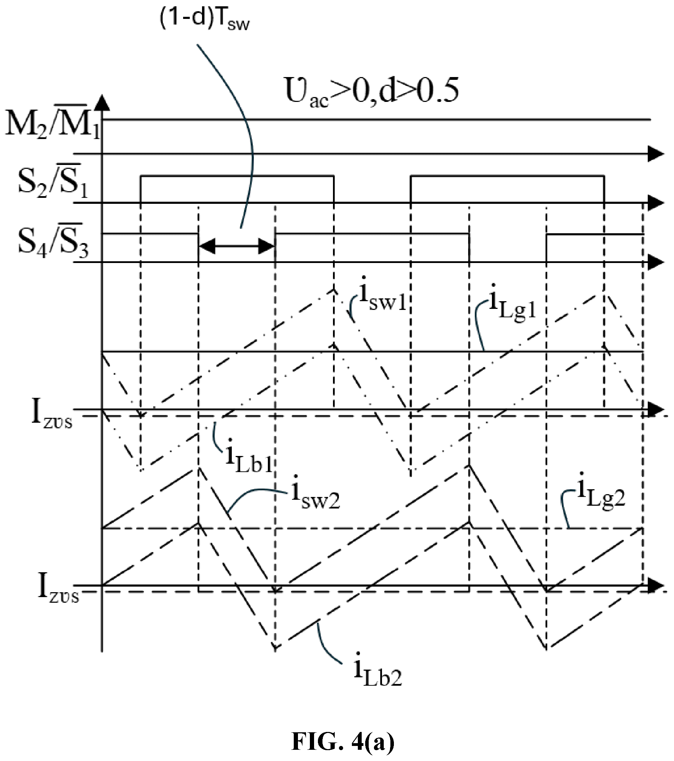

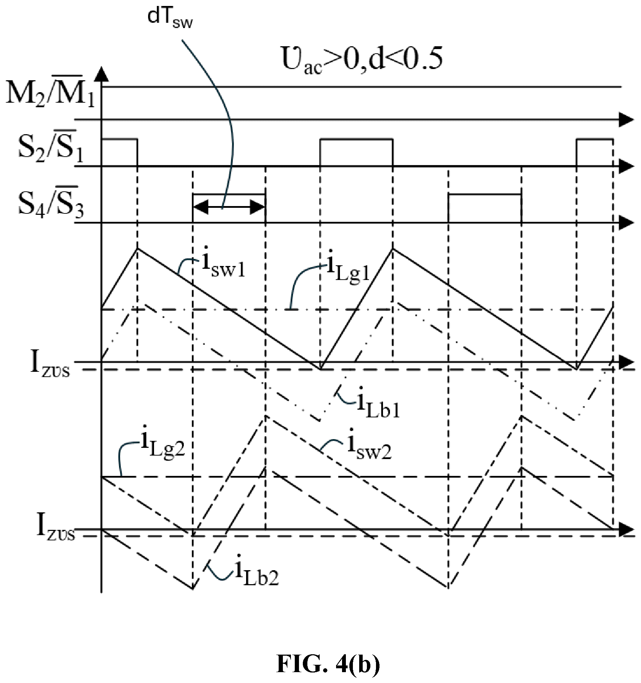

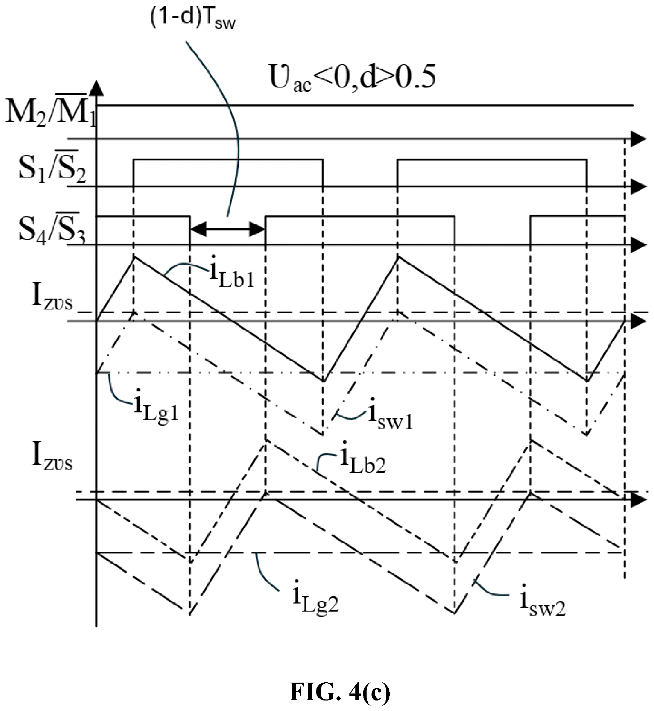

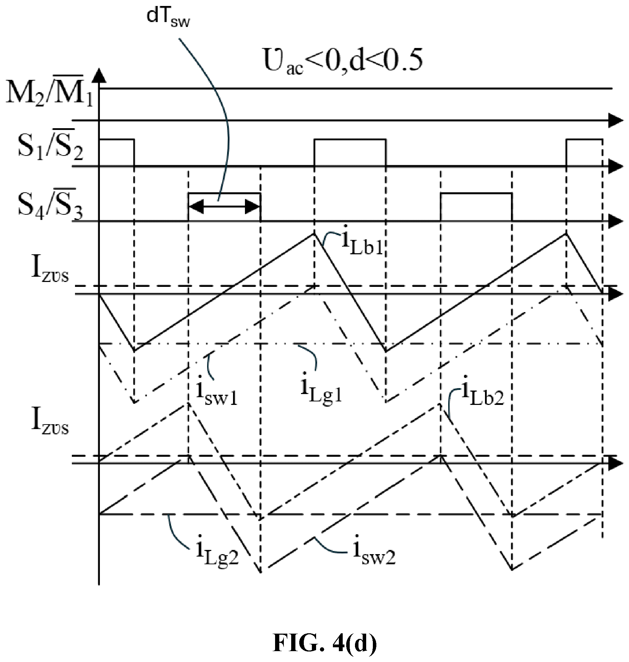

FIGS. 4(a) to 4(d) presents the switching pattern of the proposed zero-input-current-ripple two-phase interleaved iTCM totem-pole PFC rectifier of an embodiment of the disclosure, similar as that of FIGS. 2(a) to 2(d), except that L_{g1} and L_{g2} experience no current ripple. The required switching frequency under the optimal coupling condition is now independent of L_{g} inductance and follows Equation (6). ${f}_{sw} \left(t\right) = \frac{{{u}_{gpk}}^{2} \left|sin\left(wt\right)\right| \left(1-\frac{{u}_{gpk}}{{V}_{o}}\left|sin\left(wt\right)\right|\right)}{2 \left(P\left|sin\left(wt\right)\right|+{I}_{zvs}{u}_{gpk}\right)} \left(\frac{1}{{L}_{b}}\right)$ (6).

Optionally, in one embodiment of the disclosure, the first HF bridge leg B1 and the second HF bridge leg B2 substantially are or close to 180° in phase, the first HF bridge leg B1 includes a first switch S₁ and a second switch S₂ connected in series and operated in complementary manner, and the second HF bridge leg B2 includes a third switch S₃ and a fourth switch S₄ connected in series and operated in complementary manner.

Optionally, in one embodiment of the disclosure, the LF bridge leg B3 includes two switches M1 and M2 connected in series and operated in complementary manner.

In detail, FIG. 1 illustrates the schematic diagram of a rectifier according to an embodiment of the disclosure. In this topology, switches S₁- S₄ operate at high switching frequency, whereas switches M1 and M2 switch at the line frequency. Switches S₁, S₂ form a high-frequency (HF) bridge leg B1, and Switches S₃, S₄ form a HF bridge leg B2, with the two bridge legs B1 and B2 interleaved substantially by or close to 180° in phase. Within each bridge leg B1 and B2, switches S₁ and S₂ operate in a complementary manner, switches S₃ and S₄ operate in a complementary manner, and switches M1 and M2 also switch complementarily at the line frequency.

Referring to FIG. 1, optionally, in one embodiment of the disclosure, the rectifier is configured as an integrated triangular current mode (iTCM) totem-pole power factor correction (PFC) rectifier.

In detail, one embodiment of the disclosure introduces a two-phase interleaved totem-pole power factor correction (PFC) rectifier that achieves approximately zero or near zero input current ripple. This may be accomplished by optimizing or improving the magnetic coupling between the first inductor L_{g1}, or the second inductor L_{g2} and the first branch inductor L_{b1}, or the second branch inductor L_{b2}, where the mutual inductance matches the branch inductance. This coupling significantly reduces input current ripple, thereby minimizing electromagnetic interference (EMI) and enabling a smaller differential-mode EMI filter. The decoupling of (grid) inductance L_{g} design from ripple current constraints allows for a reduction in both the inductance value and the physical size of the inductors, contributing to a more compact and efficient system.

Referring to FIG. 3, optionally, in one embodiment of the disclosure, the first core C1 and the second core C2 include low-loss magnetic material.

In detail, because the first inductor L_{g1} and the first branch inductor L_{b1} are magnetically coupled on the same magnetic core, the second inductor L_{g2} and the second branch inductor L_{b2} are magnetically coupled on the same magnetic core, a HF, low-loss magnetic material (such as ferrite) should be selected to achieve high efficiency. Moreover, magnetic integration can further reduce total volume by combining the first inductor L_{g1}, the second inductor L_{g2}, the first branch inductor L_{b1}, and the second branch inductor L_{b2} on a single HF magnetic core.

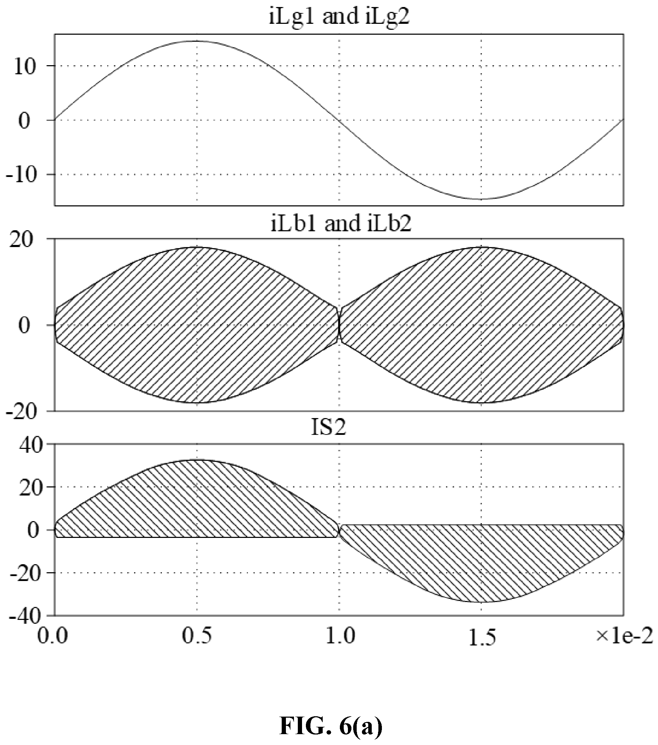

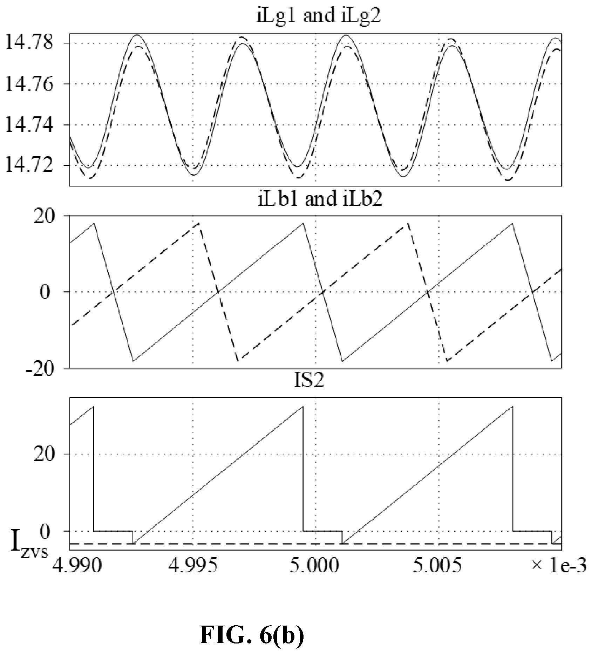

In detail, referring to FIGS. 6(a) to 6(b), FIGS. 6(a) to 6(b) present example simulation waveforms of the proposed approximately zero input-current-ripple two-phase interleaved iTCM totem-pole PFC rectifier, confirming that the first inductor L_{g1} and the second inductor L_{g2} carry nearly ripple-free currents, thus validating the approximately zero input-current-ripple characteristic enabled by mutual inductance M = L_{b}.

In some embodiments, M may be within a predetermined or workable tolerance of L_{b}.

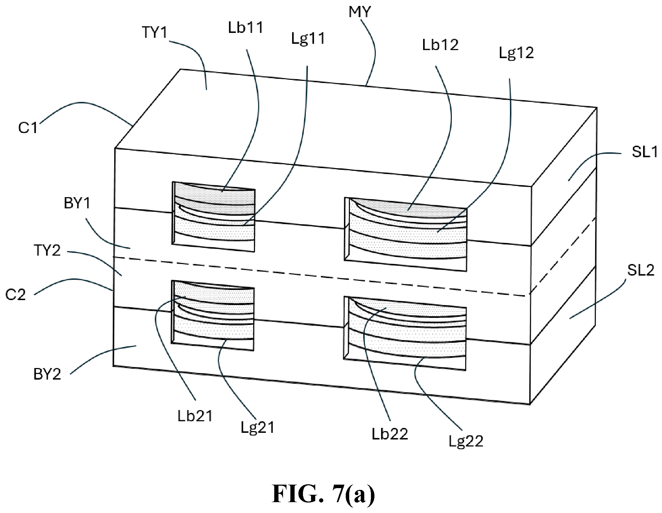

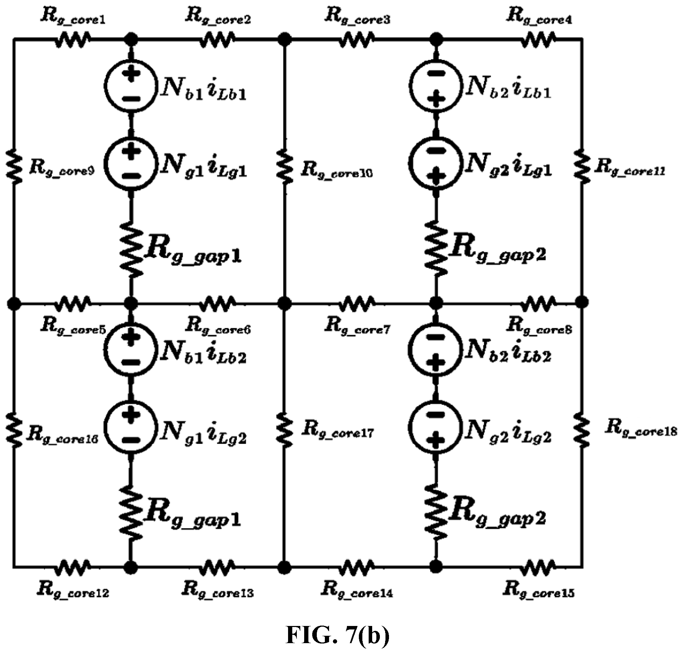

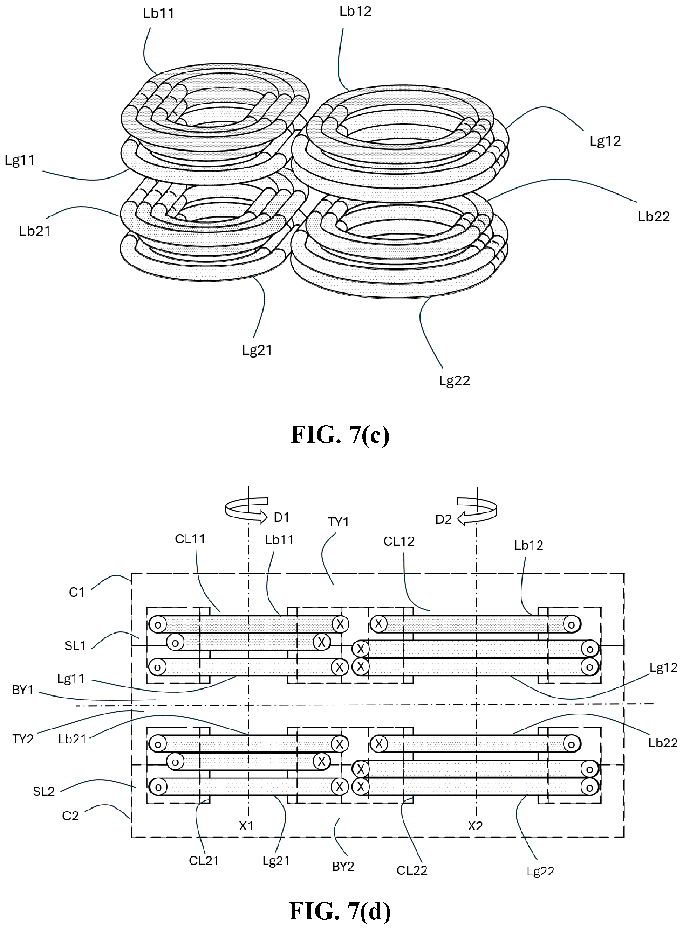

Referring to FIGS. 7(a) to 7(d), FIG. 7(a) provides an example magnetic integration design with an asymmetric winding arrangement for achieving magnetic coupling between the first inductor L_{g1}/the first branch inductor L_{b1} and the second inductor L_{g2}/the second branch inductor L_{b2} in one single core. FIG. 7(b) shows the corresponding magnetic equivalent circuit for the design illustrated in FIG. 7(a). FIGS. 7(c) to 7(d) illustrate detailed winding arrangements for achieving positive coupling and flux cancellation in the magnetic core structure provided in FIG. 7(a). Optionally, in one embodiment of the disclosure, the first core C1 includes a first center leg CL11 and a second center leg CL12 connected to the first center leg CL11, the first inductor L_{g1} includes a first sub-winding Lg11 with Ng1 turns wound around the first center leg CL11 and a second sub-winding Lg12 with Ng2 turns wound around the second center leg CL12, the first branch inductor L_{b1} includes a first sub-branch winding Lb11 with Nb1 turns wound around the first center leg CL11 and a second sub-branch winding Lb12 with Nb2 turns wound around the second center leg CL12, wherein Ng1 is not equal to Ng2, and Nb1 is not equal to Nb2 (Ng1 ≠ Ng2, Nb1 ≠ Nb2).

Optionally, in one embodiment of the disclosure, the second core C2 includes a first center leg CL21 and a second center leg CL22 connected to the first center leg CL21, the second inductor L_{g2} includes a first sub-winding Lg21 with Ng1 turns wound around the first center leg CL21 of the second core C2 and a second sub-winding Lg22 with Ng2 turns wound around the second center leg CL22 of the second core C2, the second branch inductor L_{b2} includes a first sub-branch winding Lb21 with Nb1 turns wound around the first center leg CL21 of the second core C2 and a second sub-branch winding Lb22 with Nb2 turns wound around the second center leg CL22 of the second core C2.

In detail, FIG. 7(a) provides an example integrated magnetic structure using an asymmetric winding turns arrangement (Ng1 ≠ Ng2, Nb1 ≠ Nb2), with the corresponding magnetic equivalent circuit shown in FIG. 7(b). Each pair of coupled inductors (i.e., the first inductor L_{g1}/the first branch inductor L_{b1} and the second inductor L_{g2}/the second branch inductor L_{b2}) includes Nb turns (Nb = Nb1 + Nb2) for first branch inductor L_{b1}, Ng turns (Ng = Ng1 + Ng2) for first inductor L_{g1}, Nb turns for second branch inductor L_{b2}, and Ng turns for second inductor L_{g2}. A first portion of winding (the first sub-branch winding Lb11 with Nb1 turns) of the first branch inductor L_{b1} and a first portion of winding (the first sub-winding Lg11 with Ng1 turns) of the first inductor L_{g1} are wound around one core leg (the first center leg CL11 of the first core C1), which includes air gaps (not shown). A second portion of winding (the second sub-branch winding Lb12 with Nb2 turns) of the first branch inductor L_{b1} and a second portion of winding (the second sub-winding Lg12 with Ng2 turns) of the first inductor L_{g1} are wound around the other core leg (the second center leg CL12 of the first core C1), which also includes air gaps (not shown). A first portion of winding (the first sub-branch winding Lb21 with Nb1 turns) of the second branch inductor L_{b2} and a first portion of winding (the first sub-winding Lg21 with Ng1 turns) of the second inductor L_{g2} are wound around one core leg (the first center leg CL21 of the second core C2), which includes air gaps (not shown). A second portion of winding (the second sub-branch winding Lb22 with Nb2 turns) of the second branch inductor L_{b2} and a second portion of winding (the second sub-winding Lg22 with Ng2 turns) of the second inductor L_{g2} are wound around the other core leg (the second center leg CL22 of the second core C2), which also includes air gaps (not shown).

The corresponding magnetic equivalent circuit is shown in FIG. 7(b). In some embodiments, core reluctances are R_{g_core1} to R_{g_core18}. Magnetomotive force (MMF) formula is number of turns N multiplied by current i, such as N_{b1}i_{Lb1}, N_{g1}i_{Lg1}, N_{b2}i_{Lb1}, and N_{g2}i_{Lg1}, and the unit is ampere-turns (AT).

Referring to FIG. 7(d), optionally, in one embodiment of the disclosure, the first sub-winding Lg11 of the first inductor L_{g1}, the first sub-branch winding Lb11 of the first branch inductor L_{b1}, the first sub-winding Lg21 of the second inductor L_{g2}, and the first sub-branch winding Lb21 of the second branch inductor L_{b2} have a first winding direction D1.

Optionally, in one embodiment of the disclosure, the second sub-winding Lg12 of the first inductor L_{g1}, the second sub-branch winding Lb12 of the first branch inductor L_{b1}, the second sub-winding Lg22 of the second inductor L_{g2}, and the second sub-branch winding Lb22 of the second branch inductor L_{b2} have a second winding direction D2 opposite to the first winding direction D1.

In detail, FIGS. 7(c)-(d) illustrates the detailed winding arrangement. The winding directions on each individual core leg are aligned to achieve positive magnetic coupling between windings of the first inductor L_{g1} and the first branch inductor L_{b1} and between windings of the second inductor L_{g2} and the second branch inductor L_{b2}. Meanwhile, the winding directions between the left core legs (the first center legs CL11 and CL21) and right core legs (the second center legs CL12 and CL22) are oriented oppositely to achieve flux cancellation across the side legs (side legs SL1 and SL2 without airgaps), minimizing the side leg volume. Additionally, the winding directions D1 and D2 for L_{g1} and L_{g2}, as well as for L_{b1} and L_{b2}, are maintained in the same orientation. This configuration ensures flux cancellation in the middle yoke MY (backplate), further reducing the core size.

Referring to FIG. 7(d), optionally, in one embodiment of the disclosure, the first center leg CL11 of the first core C1 and the first center leg CL21 of the second core C2 are disposed in a first axis X1, the second center leg CL12 of the first core C1 and the second center leg CL22 of the second core C2 are disposed in a second axis X2, and the first axis X1 and the second axis X2 are disposed side by side and parallel to each other.

Referring to FIG. 7(a), optionally, in one embodiment of the disclosure, a bottom yoke BY1 of the first core C1 and a top yoke TY2 of the second core C2 are integral part. In detail, referring to FIG. 7(d), the first core C1 includes a top yoke TY1 and the bottom yoke BY1 connected with the first center leg CL11, the second center leg CL12. The second core C2 includes the top yoke TY2 and a bottom yoke BY2 connected with the first center leg CL21 and second center leg CL22.

Referring to FIG. 7(a), optionally, in one embodiment of the disclosure, the first core C1 further includes a side leg SL1 connected between the top yoke TY1 and the bottom yoke BY1, and the second core C2 further includes a side leg SL2 connected between the top yoke TY2 and the bottom yoke BY2.

Optionally, in one embodiment of the disclosure, each one of the first center leg CL11 of the first core C1, the first center leg CL21 of the second core C2, the second center leg CL12 of the first core C1, and the second center leg CL22 of the second core C2 is provided with an air gap (not shown). In some embodiments, the number of the air gap is singular or multiple.

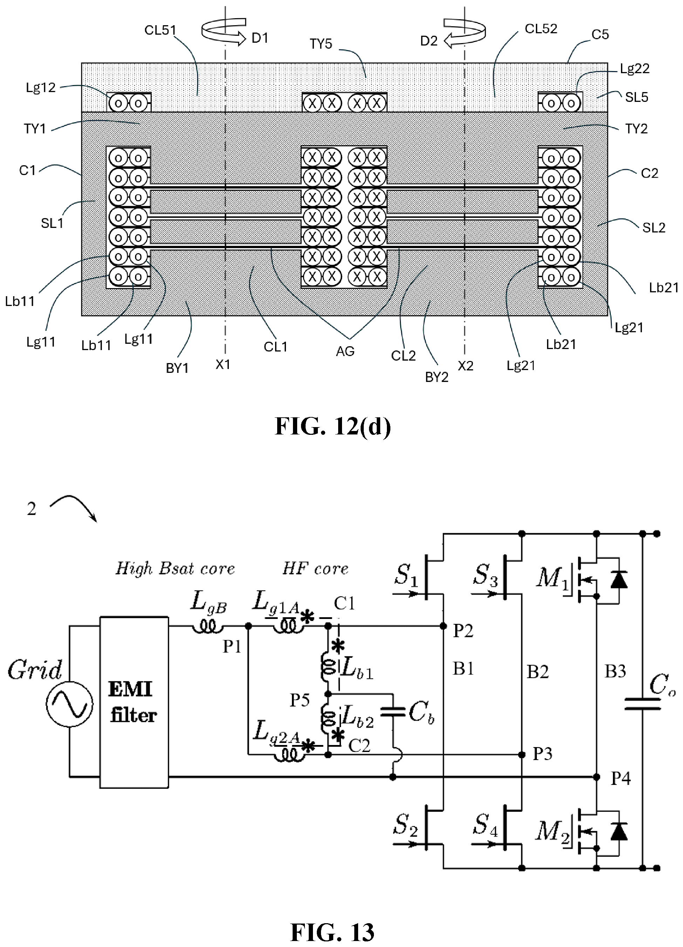

Referring to FIG. 13, Optionally, in one embodiment of the disclosure, the rectifier 2 (compared to the rectifier 1 in FIG. 3) further includes a third inductor L_{gB} connected to the first inductor L_{g1A} and the second inductor L_{g2A}, wherein an inductance of the first inductor L_{g1A} is substantially equal to an inductance of the first branch inductor L_{b1}, and an inductance of the second inductor L_{g2A} is substantially equal to an inductance of the second branch inductor L_{b2}.

In detail, the first inductors L_{g1A} and the first branch inductor L_{b1} are designed with identical inductance values and the same number of turns to achieve a full positive coupling, such that the mutual inductance M1=the inductance of the first branch inductor L_{b1}= the inductance value L_{b}. The second inductors L_{g2A} and the second branch inductor L_{b2} are designed with identical inductance values and the same number of turns to achieve a full positive coupling, such that the mutual inductance M2 = the inductance of the second branch inductor L_{b2}= the inductance value L_{b}.

Optionally, in one embodiment of the disclosure, the rectifier further includes a third core (not shown) coupling to the third inductor, wherein the first core C1 and the second core C2 include low-loss magnetic material, and the third core includes high saturation magnetic field material.

In some embodiments, the 1:1 fully coupled inductors may be implemented using HF magnetic core (such as ferrite) to minimize core losses. Since the third inductor L_{gB} carries approximately zero current ripple, it experiences negligible core loss even under high switching frequency operation. Accordingly, high Bsat magnetic materials (such as high-flux powder and nanocrystalline) can be selected for the third inductor L_{gB} to minimize its physical dimension.

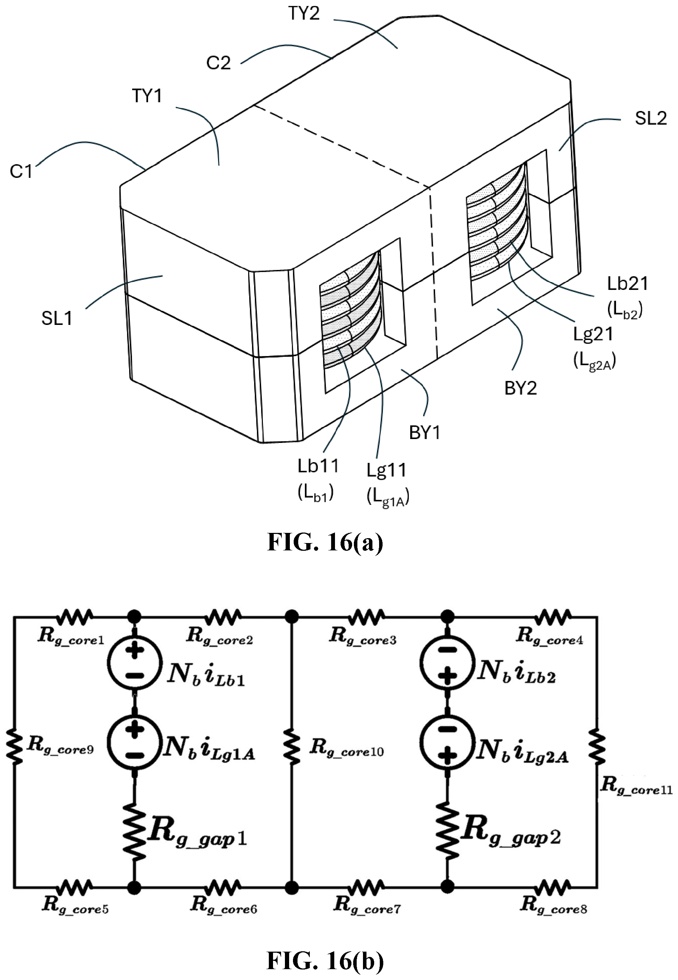

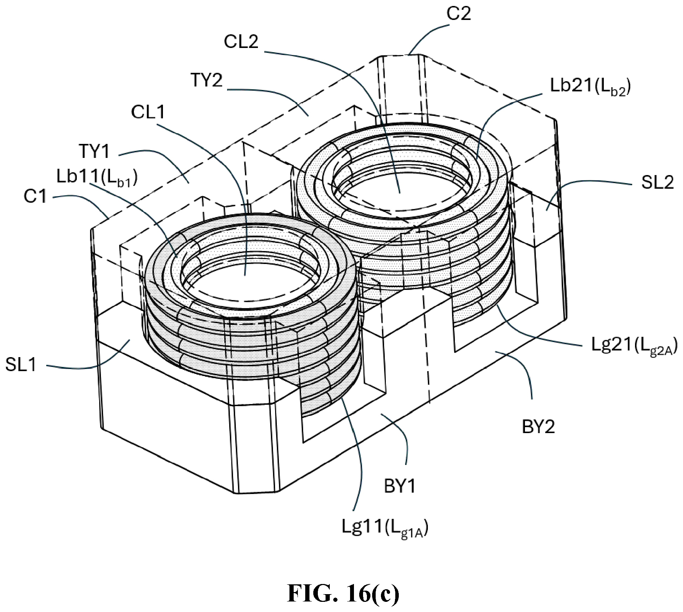

Referring to FIG. 16(a) to FIG. 16(e), FIG. 16(a) shows an example magnetic integration structure applicable to the embodiments described in FIGS. 13 to 15. FIG. 16(b) presents the corresponding magnetic equivalent circuit for the structure shown in FIG. 16(a). FIGS. 16(c) to (e) depict detailed winding arrangements and illustrate flux cancellation techniques. Optionally, in one embodiment of the disclosure, the first core C1 includes a center leg CL1, a top yoke TY1, a bottom yoke BY1, and a side leg SL1 connected to the top yoke TY1 and the bottom yoke BY1, the second core C2 includes a center leg CL2 , a top yoke TY2, a bottom yoke BY2 , and a side leg SL2 connected to the top yoke TY2 and the bottom yoke BY2, the top yokes TY1 and TY2 of the first core C1 and the second core C2 are integral part, the bottom yokes BY1 and BY2 of the first core C1 and the second core C2 are integral part, the center legs CL1 and CL2 of the first core C1 and the second core C2 are disposed side by side and parallel to each other.

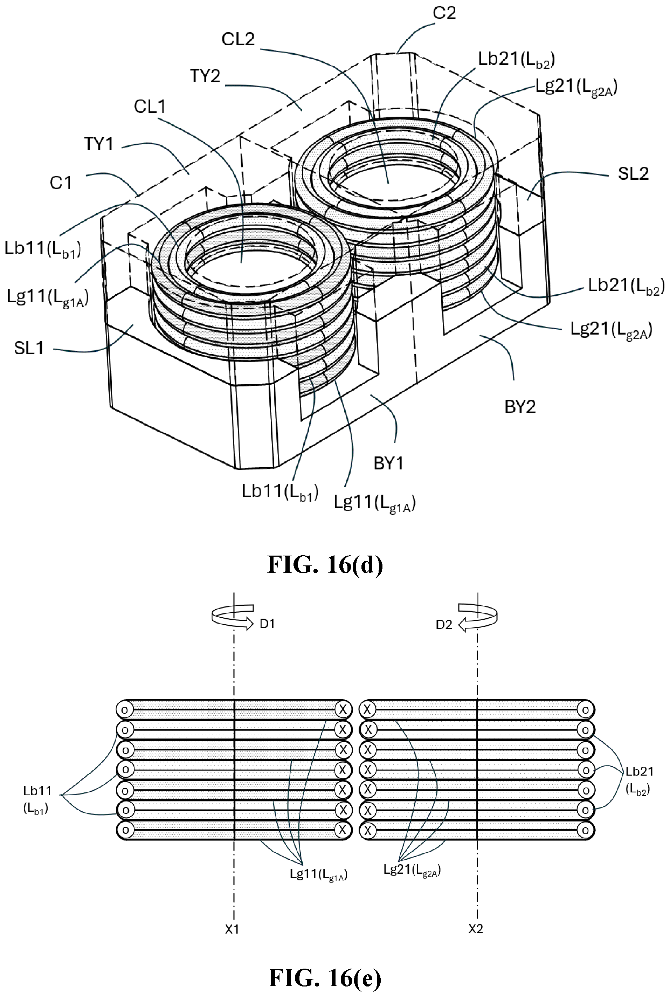

In detail, FIG. 16(a) illustrates an example magnetic integration structure for the first branch inductor L_{b1}, the second branch inductor L_{b2}, the first inductor L_{g1A} and the second inductor L_{g2A} that can be applied into the alternative embodiments described in FIGS. 13-15. The corresponding magnetic equivalent circuit is shown in FIG. 16(b), and the detailed winding arrangement is depicted in FIGS. 16(c)-(d). In this structure, winding Lb11 of the first branch inductor L_{b1} and winding Lg11 of the first inductor L_{g1A} are wound on the left core leg (center leg CL1) of the HF magnetic core (with air gaps), with an identical number of turns (Nb turns) and with the same winding direction D1, thereby ensuring full positive magnetic coupling. Similarly, winding Lb21 of second branch inductor L_{b2} and winding Lg21 of the second inductor L_{g2A} are wound on the right core leg (center leg CL2) of the HF magnetic core (with air gaps), with identical turns (Nb turns) and the same winding direction D2 to achieve full coupling. To enhance coupling and ensure that the mutual inductance meeting M = L_{b}, winding techniques such as bifilar winding (as shown in FIG. 16(c)) or sandwich winding (as shown in FIG. 16(d)) can be employed. As depicted in FIG. 16(e), the winding directions D1 and D2 between the first branch inductor L_{b1} and the second branch inductor L_{b2} (as well as between first inductor L_{g1A} and second inductor L_{g2A}) are arranged in opposite directions. This configuration enables cancellation of the LF flux components in the gapless side legs SL1 and SL2, thereby minimizing the volume of side legs SL1 and SL2.

In some embodiments, M may be within a predetermined or workable tolerance of inductance L_{b}.

Optionally, in one embodiment of the disclosure, both the center legs CL1 and CL2 of the first core C1 and the second core C2 are provided with an air gap. In some embodiments, the number of the air gap is singular or multiple.

Optionally, in one embodiment of the disclosure, numbers of turns of winding Lg11 of the first inductor L_{g1A} and winding Lb11 the first branch inductor L_{b1} are identical, and numbers of turns of winding Lg21 of the second inductor L_{g2A} and winding Lb21 the second branch inductor L_{b2} are identical.

Referring to FIG. 16(c), optionally, in one embodiment of the disclosure, winding Lg11 of the first inductor L_{g1A} and winding Lb11 of the first branch inductor L_{b1} are bifilar winding. Referring to FIG. 16(d), the winding Lg11 of the first inductor L_{g1A} and winding Lb11 of the first branch inductor L_{b1} are sandwich winding. Referring to FIG. 16(c), winding Lg21 of the second inductor L_{g2A} and winding Lb21 of the second branch inductor L_{b2} are bifilar. Referring to FIG. 16(d), the winding Lg21 of the second inductor L_{g2A} and winding Lb21 of the second branch inductor L_{b2} are sandwich winding.

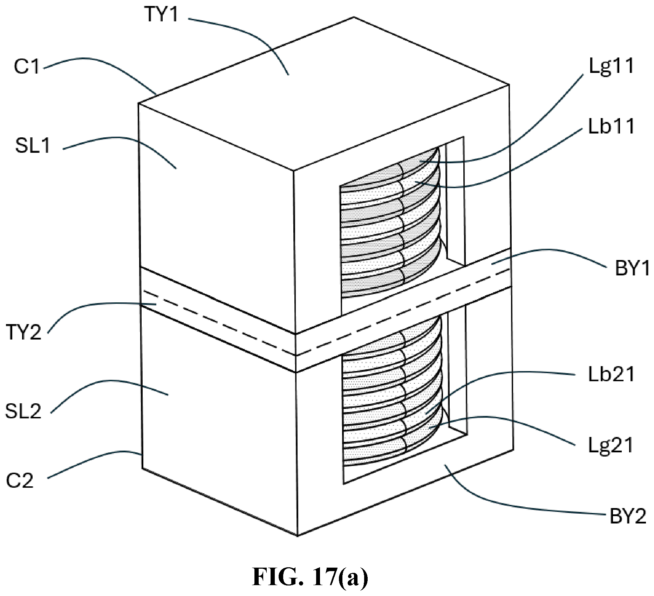

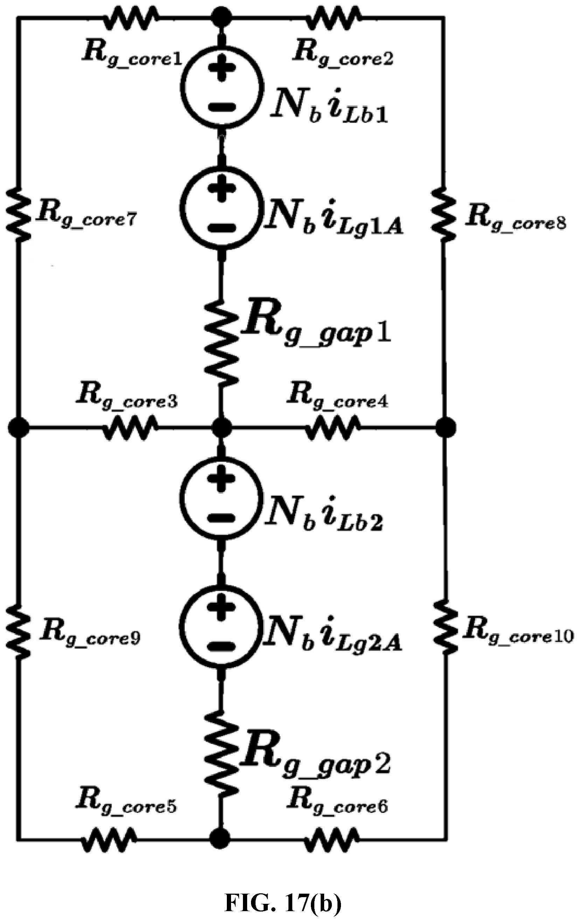

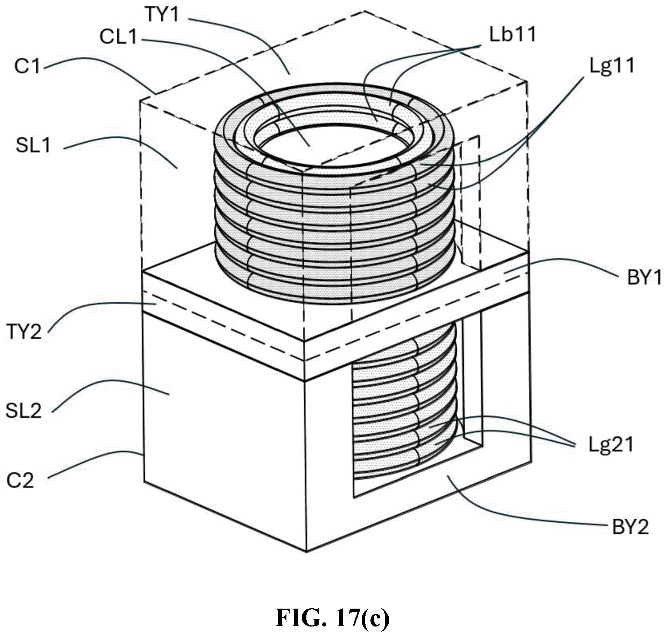

Referring to FIG. 17(a) to FIG. 17(e), FIG. 17(a) illustrates another example magnetic integration structure applicable to the alternative embodiments described in FIGS. 13 to 15, differing in magnetic structure. FIG. 17(b) shows the corresponding magnetic equivalent circuit for the structure in FIG. 17(a). FIGS. 17(c) to 17(e) present detailed winding arrangements and flux cancellation strategies for the structure illustrated in FIG. 17(a). Optionally, in one embodiment of the disclosure, the first core C1 includes a center leg CL1, a top yoke TY1, a bottom yoke BY1, and a side leg SL1 connected to the top yoke TY1 and the bottom yoke BY1, the second core C2 includes a center leg CL2, a top yoke TY2, a bottom yoke BY2, and a side leg SL2 connected to the top yoke TY2 and the bottom yoke BY2, the bottom yoke BY1 of the first core C1 and the top yoke TY2 of the second core C2 are integral part, the center legs CL1 and CL2 of the first core C1 and the second core C2 are disposed co-axial.

Optionally, in one embodiment of the disclosure, numbers Nb of turns of winding Lg11 of the first inductor L_{g1A} and numbers Nb of turns of winding Lb11 of the first branch inductor L_{b1} are identical, and numbers Nb of turns of winding Lg21 of the second inductor L_{g2A} and numbers Nb of turns of winding Lb21 of the second branch inductor L_{b2} are identical.

Referring to FIG. 17(c), optionally, in one embodiment of the disclosure, windings Lg11 of the first inductor L_{g1A} and windings Lb11 of the first branch inductor L_{b1} are bifilar winding, and windings Lg21 of the second inductor L_{g2A} and windings Lb21 of the second branch inductor L_{b2} are bifilar winding.

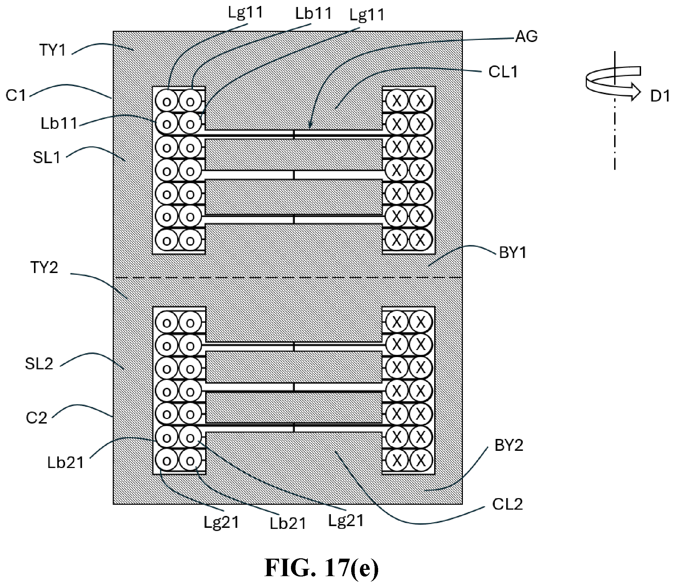

Referring to FIG. 17(e), optionally, in one embodiment of the disclosure, windings Lg11 of the first inductor L_{g1A} and windings Lb11 of the first branch inductor L_{b1} are sandwich winding, and windings Lg21 of the second inductor L_{g2A} and windings Lb21 of the second branch inductor L_{b2} are sandwich winding.

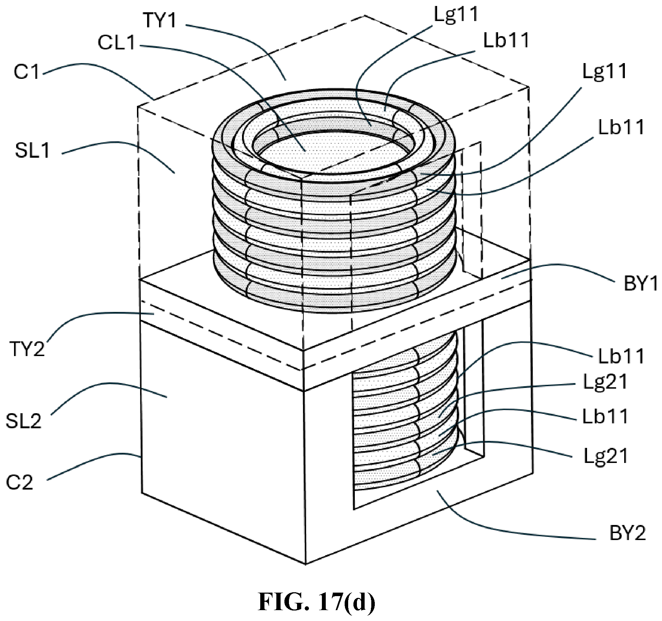

In detail, FIG. 17(a) illustrates another example magnetic integration structure for the first branch inductors L_{b1}, the second branch inductor L_{b2}, the first inductor L_{g1A} and the second inductor L_{g2A} that can be applied into the alternative embodiments described in FIGS. 13-15. The corresponding magnetic equivalent circuit is shown in FIG. 17(b), and the detailed winding arrangement is depicted in FIGS. 17(c)-(d). In this structure, windings of first branch inductor L_{b1} and first inductor L_{g1A} are wound on the upper core leg (center leg CL1) of the HF magnetic core (with air gaps AG), with an identical number of turns (Nb turns) and with the same winding direction, thereby ensuring the full positive magnetic coupling. Similarly, windings of the second branch inductor L_{b2} and the second inductor L_{g2A} are wound on the lower core leg (center leg CL2) of the HF magnetic core (with air gaps), with identical turns (Nb turns) and the same winding direction D1 to achieve the full positive coupling. To enhance coupling and ensure that the mutual inductance meeting M = L_{b}, winding techniques such as bifilar winding (as shown in FIG. 17(c)) or sandwich winding (as shown in FIG. 17(d)) can be employed. As depicted in FIG. 17(e), the winding directions D1 between winding Lb11 of the first branch inductor L_{b1} and winding Lb21 of the second branch inductor L_{b2} (as well as between the winding Lg11 of the first inductor L_{g1A} and the winding Lg21 of the second inductor L_{g2A}) are arranged in the same directions. This configuration enables cancellation of the LF flux components in the middle horizontal backplate of the HF magnetic core, thereby minimizing the volume of the backplate.

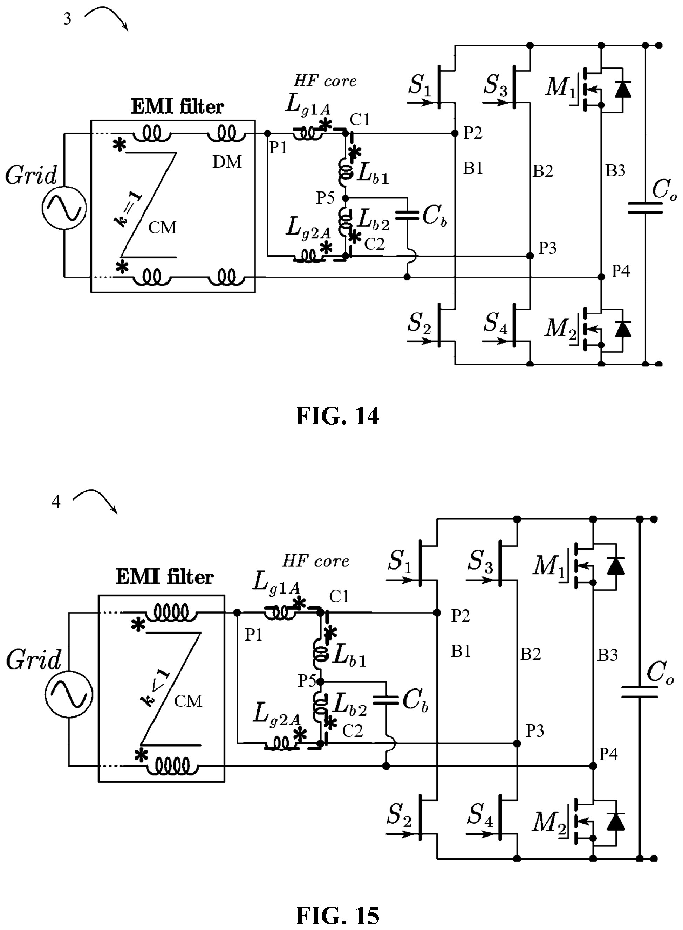

Referring to FIG. 14, FIG. 14 presents another embodiment where the differential-mode inductor in the EMI filter is utilized to replace the separate third inductor L_{gB} component. Optionally, in one embodiment of the disclosure, the rectifier 3 further includes an electro-magnetic interference (EMI) filter connected between the input end P1 and the middle end P4 of the LF bridge leg B3, wherein the EMI filter includes a common-mode choke CM and a differential-mode inductor DM, a coupling factor k of the common-mode choke CM is unity, and the differential-mode inductor DM is configured as a third inductor L_{gB}.

In some embodiments, in an alternative implementation, if the EMI filter includes a differential-mode inductor with an inductance value greater than that of the third inductor L_{gB}, the differential-mode inductor can be utilized to replace the third inductor L_{gB} and perform the same functionality, thereby eliminating the need for a separate the third inductor L_{gB} component and further reducing the overall magnetic volume. The corresponding schematic diagram for this alternative implementation is illustrated in FIG. 14.

FIG. 15 illustrates another embodiment where the leakage inductance of a common-mode choke CM is used instead of a separate third inductor L_{gB} component. Optionally, in one embodiment of the disclosure, the rectifier 4 further includes an electro-magnetic interference (EMI) filter connected between the input end P1 and the middle end P4 of the LF bridge leg B3, wherein the EMI filter includes a common-mode choke CM, a coupling factor k of the common-mode choke CM is less than unity, and a leakage inductance of the common-mode choke CM is configured as a third inductor L_{gB}.

In some embodiments, in a further alternative, if the EMI filter does not include a differential-mode inductor DM, or if the differential-mode inductance is insufficient, the leakage inductance of a common-mode choke CM (having a coupling factor k less than unity) can also be utilized to fulfill the functionality of the third inductor L_{gB}, thereby eliminating the need for a separate the third inductor L_{gB} component and further reducing the overall magnetic volume. The corresponding schematic diagram for this embodiment is shown in FIG. 15.

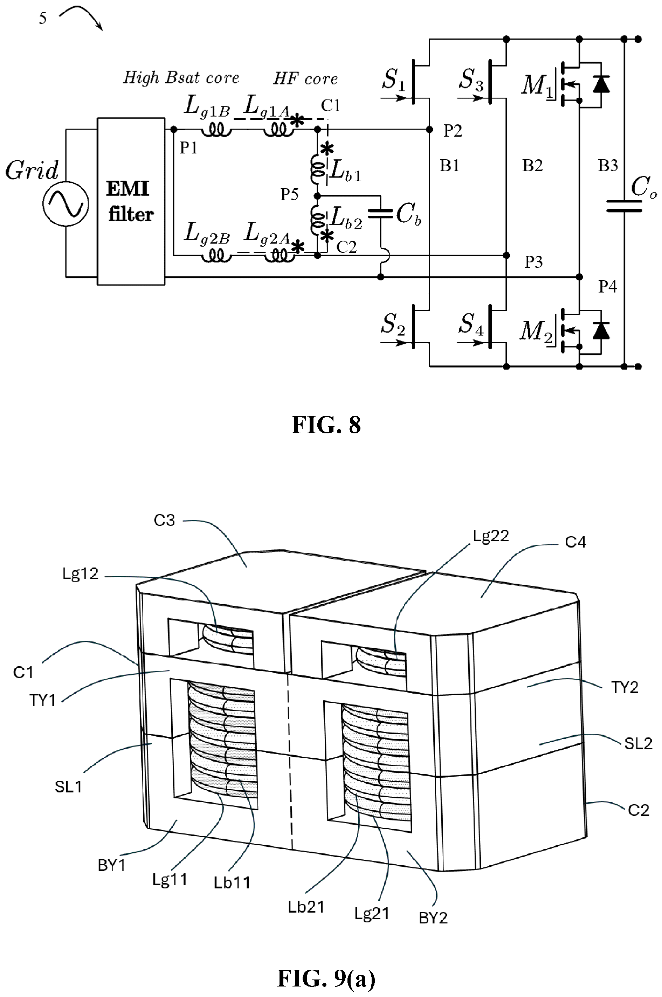

Referring to FIG. 8, FIG. 8 presents another embodiment where the first inductor L_{g1} and the second inductor L_{g2} are split into two inductors (L_{g1A}/L_{g1B} and L_{g2A}/L_{g2B}) to optimize or improve magnetic integration. Optionally, in one embodiment of the disclosure, the rectifier 5 further includes a third inductor L_{g1B} connected to the first inductor L_{g1A} in series and a fourth inductor L_{g2B} connected to the second inductor L_{g2A} in series, wherein an inductance of the first inductor L_{g1A} is substantially equal to an inductance of the first branch inductor L_{b1}, and an inductance of the second inductor L_{g2A} is substantially equal to an inductance of the second branch inductor L_{b2}.

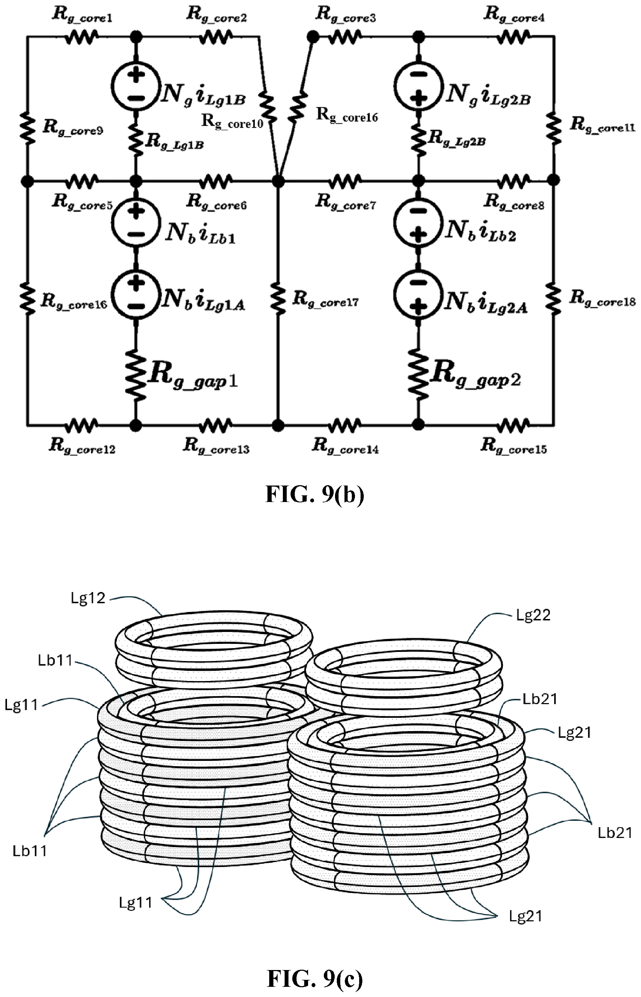

Referring to FIG. 8, and FIG. 9(a) to FIG. 9(d), FIG. 9(a) illustrates an example hybrid magnetic integration structure for the embodiment shown in FIG. 8. FIG. 9(b) shows the corresponding magnetic equivalent circuit for the structure illustrated in FIG. 9(a). FIGS. 9(c) to 9(d) depict the detailed winding arrangement for the structure shown in FIG. 9(a) for achieving flux cancellation within the hybrid magnetic core structure. Optionally, in one embodiment of the disclosure, the rectifier 5 further includes a third core C3 coupling to the third inductor L_{g1B}, and a fourth core C4 coupling to the fourth inductor L_{g2B}, wherein the first core C1 and the second core C2 include low-loss magnetic material, and the third core C3 and the fourth core C4 include high Bsat material.

In detail, FIG. 8 illustrates an alternative implementation of the proposed topology shown in FIG. 3. In this configuration, the previously single inductors (the first inductor L_{g1} and the second inductor L_{g2}) are divided into two separate inductors, designated as first inductor L_{g1A}, third inductor L_{g2A}, second inductor L_{g1B}, and fourth inductor L_{g2B}. The first inductor L_{g1A} is designed to have the same inductance and number of turns (Nb turns) as the associated first branch inductor L_{b1}, and the second inductor L_{g2A} is designed to have the same inductance and number of turns (Nb turns) as the associated second branch inductor L_{b2}, such that the full positive magnetic coupling is achieved, with the mutual inductance meeting M= L_{b}. The additional inductors (the third inductor L_{g1B} and the fourth inductor L_{g2B}) have the number of turns (Ng turns), and they are not magnetically coupled with the first branch inductor L_{b1} and the second branch inductor L_{b2}, respectively. In some embodiments, the fully coupled 1:1 inductors (i.e., first inductor L_{g1A}/first branch inductor L_{b1} and second inductor L_{g2A}/second branch inductor L_{b2}) might be implemented using HF magnetic cores (such as ferrites) to reduce core losses at high switching frequency operation, while the third inductor L_{g1B} and the fourth inductor L_{g2B}, carrying no current ripple, can be built with high Bsat magnetic cores (such as high-flux powder and nanocrystalline cores) to recude their volume.

In detail, in another perspective, FIG. 13 presents a further derived embodiment based on the topology concept previously described in FIG. 8. FIG. 13 illustrates another embodiment of a derived circuit where the third inductor L_{g1B} and the fourth inductor L_{g2B} are merged into a single inductor L_{gB} to minimize magnetic volume and improve power density. In detail, compared to FIG. 8, the left terminals of inductors L_{g1A} and L_{g2A} of the rectifier in FIG. 13 are electrically connected, and L_{g1B} and L_{g2B} are merged into a single inductor, designated as L_{gB}, thereby reducing the total number of inductors, minimizing the magnetic component volume, and achieving higher power density. T

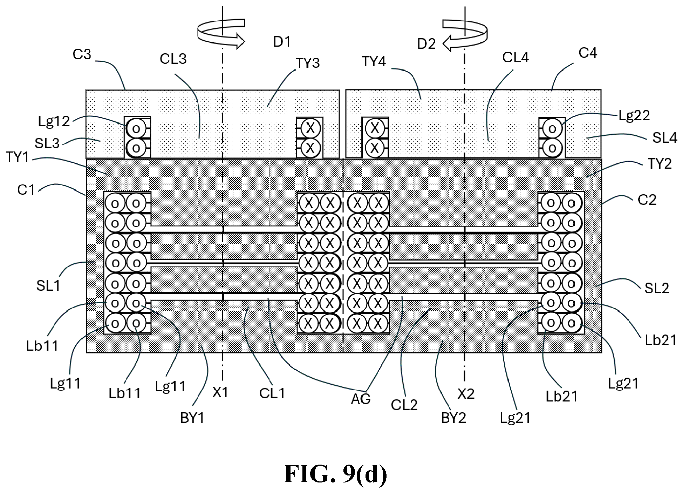

Referring to FIG. 9(d), optionally, in one embodiment of the disclosure, the first core C1 includes a center leg CL1, a top yoke TY1, a bottom yoke BY1, and a side leg SL1 connected to the top yoke TY1 and the bottom yoke BY1, the second core C2 includes a center leg CL2, a top yoke TY2, a bottom yoke BY2, and a side leg SL2 connected to the top yoke TY2 and the bottom yoke BY2, wherein the third core C3 contact the top yoke TY1 of the first core C1, the fourth core C4 contact the top yoke TY2 of the second core C2, and wherein the top yokes TY1 and TY2 of the first core C1 and the second core C2 are integral part, the bottom yokes BY1 and BY2 of the first core C1 and the second core C2 are integral part, and the center legs CL1 and CL2 of the first core C1 and the second core C2 are disposed side by side and parallel to each other.

Optionally, in one embodiment of the disclosure, the third core C3 and the first core C1 are disposed co-axial, and wherein the fourth core C4 and the second core C2 are disposed co-axial.

Optionally, in one embodiment of the disclosure, a winding direction D1 of winding Lg12 of the third inductor L_{g1B}, winding Lg11 of the first inductor L_{g1A}, and winding Lb11 the first branch inductor L_{b1} is opposite to a winding direction D2 of winding Lg22 of the fourth inductor L_{g2B}, winding Lg21 of the second inductor L_{g2A}, and winding Lb21 of the second branch inductor Lb2.

Optionally, in one embodiment of the disclosure, windings Lg11 of the first inductor L_{g1A} and windings Lb11 of the first branch inductor L_{b1} are interleaved, and windings Lg21 of the second inductor L_{g2A} and windings Lb21 of the second branch inductor L_{b2} are interleaved.

In detail, FIG. 9(a) illustrates an example hybrid magnetic integration structure for implementing the alternative embodiment described in FIG. 8. The corresponding magnetic equivalent circuit is shown in FIG. 9(b), and the detailed winding arrangement is depicted in FIG. 9(c). In this structure, the first branch inductor L_{b1}, the second branch inductor L_{b2}, the first inductor L_{g1A}, and the second inductor L_{g2A} are wound on a HF magnetic core (such as ferrite), while the third inductor L_{g1B} and the fourth inductor L_{g2B} are wound separately on two high Bsat magnetic cores (such as high-flux powder or nanocrystalline cores). Specifically, the first branch inductor L_{b1} and the first inductor L_{g1A} are wound on the left core leg (center leg CL1) of the HF magnetic core (with air gaps AG), with an identical number of turns (Nb turns) and with the same winding direction D1, thereby ensuring the full positive magnetic coupling. Similarly, the second branch inductor L_{b2} and the second inductor L_{g2A} are wound on the right core leg (center leg CL2) of the HF magnetic core (also with air gaps AG), again with identical turns (Nb turns) and the same winding direction D2 to achieve the full positive magnetic coupling.

To enhance coupling and ensure that the mutual inductance meeting M = L_{b}, winding techniques such as bifilar winding or sandwich winding can be employed. As depicted in FIG. 9(d), the winding directions D1 and D2 between the first branch inductor L_{b1} and the second branch inductor L_{b2} (as well as between the first inductor L_{g1A} and the second inductor L_{g2A}) are arranged in opposite directions. This configuration enables cancellation of the LF flux components in the gapless side legs SL1 and SL2, thereby minimizing the volume of the side legs.

To fully utilize flux cancellation and reduce the overall volume of the magnetic core structure, the high Bsat magnetic cores (the third core C3 and the fourth core C4) for third inductor L_{g1B} and fourth inductor L_{g2B} are physically overlaid with the HF magnetic cores (the first core C1 and the second core C2) for the first branch inductor L_{b1}, the second branch inductor L_{b2}, the first inductor L_{g1A}, and the second inductor L_{g2A}, sharing a common central yoke (horizontal backplate, the top yoke TY1 and TY2), which is shown in FIG. 9(d). The winding directions of the third inductor L_{g1B} and the fourth inductor L_{g2B} are aligned with the respective winding directions D1 and D2 of the first inductor L_{g1A} and the second inductor L_{g2A} on the same side, such that the LF flux components inside the shared backplate are canceled out, thereby reducing the thickness of backplate.

Optionally, in one embodiment of the disclosure, the third core C3 includes a center leg CL3, a side leg SL3, and a top yoke TY3 connected to the center leg CL3 and the side leg SL3, and the fourth core C4 includes a center leg CL4, a side leg SL4, and a top yoke TY4 connected to the center leg CL4 and the side leg SL4.

In some embodiments, to maximize the inductance values of third inductor L_{g1B} and fourth inductor L_{g2B}, the center legs CL3 and CL4 of the high Bsat magnetic cores might be constructed without air gaps, or include powder core materials inherently exhibiting distributed air gaps. While such design may lead to variations in the inductance values of the third inductor L_{g1B} and the fourth inductor L_{g2B} under different current bias conditions, the approximately zero or near zero input current ripple characteristic achieved by mutual inductance M = L_{b} remains unaffected.

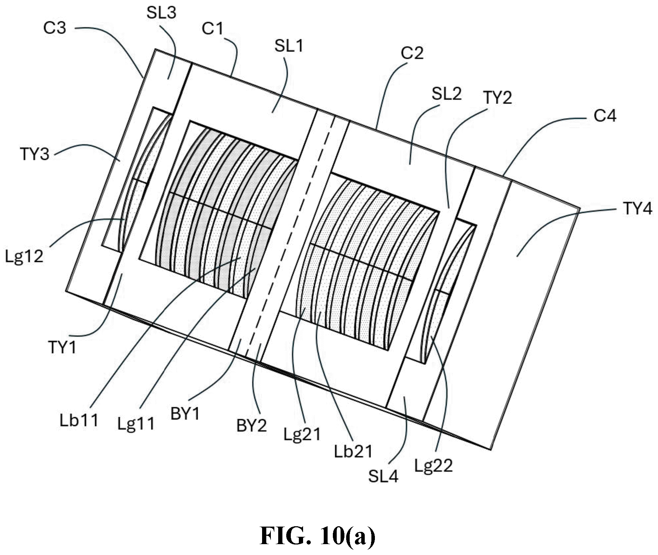

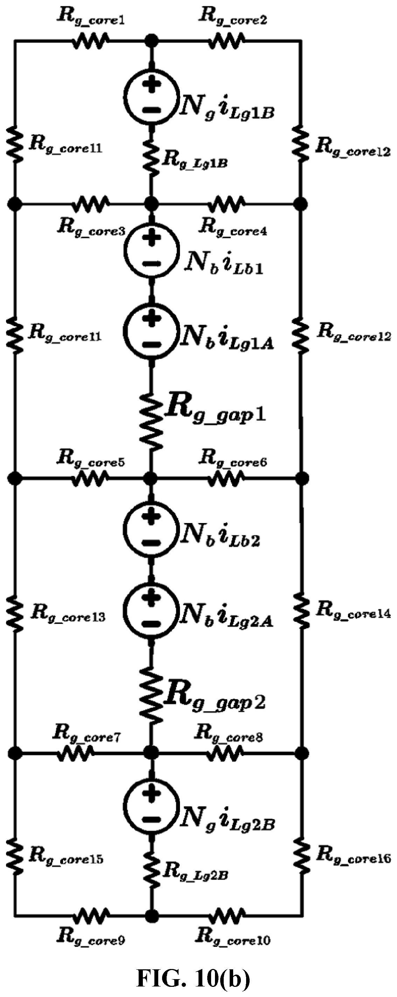

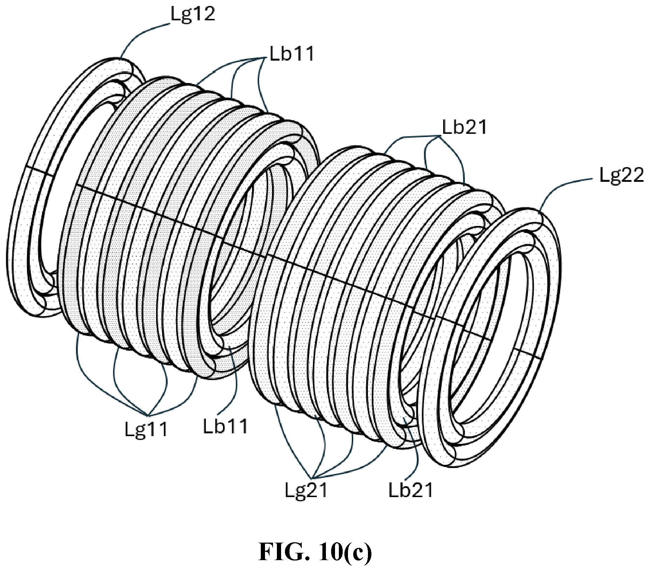

Referring to FIG. 10(a) to FIG. 10(d), FIG. 10(a) illustrates another example hybrid magnetic integration structure based on the embodiment described in FIG. 8. FIG. 10(b) shows the corresponding magnetic equivalent circuit for the structure illustrated in FIG. 10(a). FIGS. 10(c) to 10(d) depict the detailed winding arrangement for the structure shown in FIG. 10(a) for achieving flux cancellation within the hybrid magnetic core structure. Optionally, in one embodiment of the disclosure, the first core C1 includes a center leg CL1, a top yoke TY1, a bottom yoke BY1, and a side leg SL1 connected to the top yoke TY1 and the bottom yoke BY1, the second core C2 includes a center leg CL2, a top yoke TY2, a bottom yoke BY2, and a side leg SL2 connected to the top yoke TY2 and the bottom yoke BY2, wherein the third core C3 contact the top yoke TY1 of the first core C1, the fourth core C4 contact the top yoke TY2 of the second core C2, and wherein the bottom yoke BY1 of the first core C1 and the bottom yoke BY2 of the second core C2 are integral part, and the center legs CL1 and CL2 of the first core C1 and the second core C2 are disposed co-axial.

Optionally, in one embodiment of the disclosure, the third core C3, the first core C1, the fourth core C4, and the second core C2 are disposed co-axial.

Optionally, in one embodiment of the disclosure, a winding direction D1 of the third inductor L_{g1B}, the first inductor L_{g1A}, and the first branch inductor L_{b1} is identical to a winding direction of the fourth inductor L_{g2B}, the second inductor L_{g2A}, and the second branch inductor L_{b2}.

Optionally, in one embodiment of the disclosure, windings Lg11 of the first inductor L_{g1A} and windings Lb11 of the first branch inductor L_{b1} are interleaved, and windings Lg21 of the second inductor L_{g2A} and windings Lb21 of the second branch inductor L_{b2} are interleaved.

In detail, FIG. 10(a) illustrates another example hybrid magnetic integration structure for implementing the alternative embodiment described in FIG. 8. The corresponding magnetic equivalent circuit is shown in FIG. 10(b), and the winding arrangement is depicted in FIG. 10(c). In this structure, the first branch inductor L_{b1}, the second branch inductor L_{b2}, the first inductor L_{g1A}, and the second inductor L_{g2A} are wound on a HF magnetic core (such as ferrite), while the third inductor L_{g1B} and the fourth inductor L_{g2B} are wound separately on two high Bsat magnetic cores (such as high-flux powder or nanocrystalline cores). Specifically, the winding Lb11 of the first branch inductor L_{b1} and the winding Lg11 of the first inductor L_{g1A} are wound together on the upper core leg (the center leg CL1) of the HF magnetic core (with air gaps AG), with the same number of turns and in the same direction D1, thereby ensuring the full positive magnetic coupling. Similarly, the winding L_{b21} of the second branch inductor L_{b2} and the winding Lg21 of the second inductor L_{g2A} are wound together on the lower core leg (the center leg CL2) of the HF magnetic core (also with air gaps AG) with the same number of turns and in the same direction D1 to achieve full positive magnetic coupling.

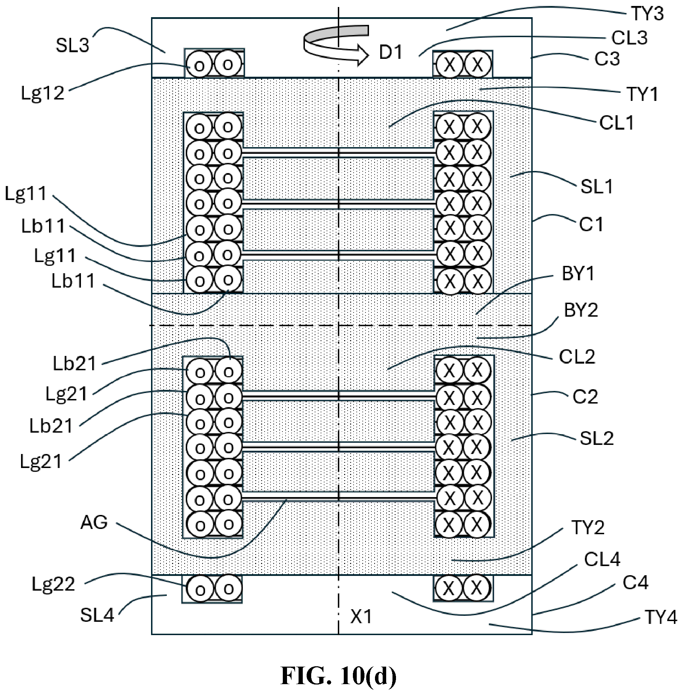

To strengthen the magnetic coupling and ensure that the mutual inductance satisfies M = L_{b}, winding techniques such as bifilar winding or sandwich winding can be employed. As illustrated in FIG. 10(d), the winding directions D1 of the first branch inductor L_{b1} and the second branch inductor L_{b2}, as well as those of the first inductor L_{g1A} and the second inductor L_{g2A}, are arranged in the same orientation. In some embodiments, this arrangement may facilitate the cancellation of LF flux components inside the middle horizontal backplate of the HF magnetic core, and reduce or even minimize the volume of the backplate. To improve or even maximize flux cancellation and further reduce the overall magnetic core volume, the high Bsat magnetic cores for the third inductor L_{g1B} and the fourth inductor L_{g2B} may be physically overlaid with the HF magnetic core structure, sharing the upper and lower horizontal backplates, respectively, which are shown in FIG. 10(a). The winding direction D1 of the third inductor L_{g1B} and the fourth inductor L_{g2B} are aligned with the respective winding directions of the first inductor L_{g1A} and the second inductor L_{g2A} on the same side, such that the LF flux components within the shared upper and lower backplates are effectively canceled out. As a result, the thickness of the shared horizontal backplates might be minimized.

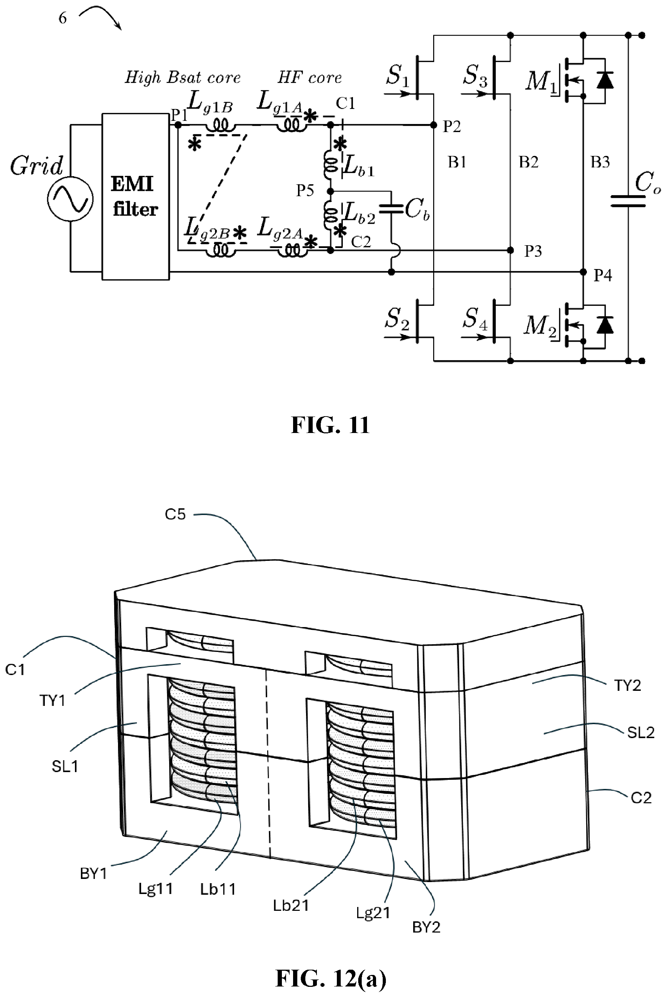

Referring to FIG. 11, FIG. 11 illustrates a schematic diagram of another rectifier 6 according to an embodiment of the disclosure. Optionally, in one embodiment of the disclosure, the third inductor L_{g1B} and the fourth inductor L_{g2B} are configured to coupling to each other.

In detail, FIG. 11 illustrates an additional derived embodiment based on the topology concept previously presented in FIG. 8. In this implementation, additional magnetic coupling is introduced between the third inductor L_{g1B} and the fourth inductor L_{g2B} to further enhance the cancellation of LF flux components. This enhanced flux cancellation enables a reduction in the overall magnetic core volume. Other aspects of the circuit, including the magnetic coupling between the first inductor L_{g1A} and the first branch inductor L_{b1}, and between the second inductor L_{g2A} and the second branch inductor L_{b2}, as well as the selection of hybrid magnetic core materials, remain consistent with those described in connection with FIG. 8.

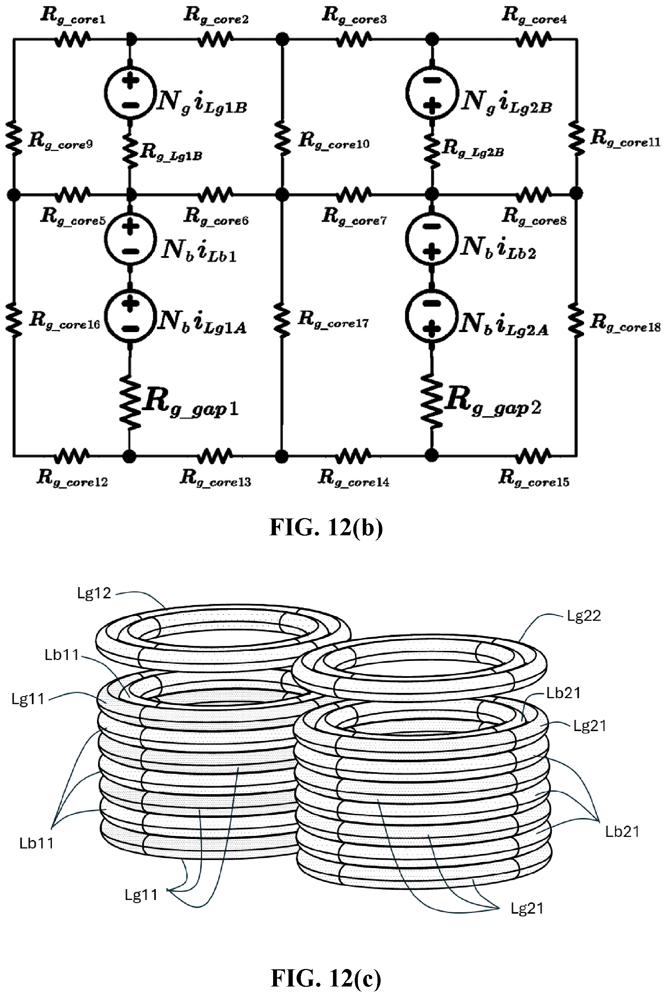

Referring to FIGS. 12(a) to 12(d), FIG. 12(a) shows an example magnetic structure implementing the hybrid magnetic integration described in FIG. 11. FIG. 12(b) presents the corresponding magnetic equivalent circuit for the structure in FIG. 12(a). FIGS. 12(c) to 12(d) depict detailed winding arrangements and flux cancellation configurations for the structure in FIG. 12(a). Optionally, in one embodiment of the disclosure, the rectifier further includes a fifth core C5 includes a first center leg CL51 and a second center leg CL52 connected to the first center leg CL51, wherein the third inductor L_{g1B} is wound around the first center leg CL51, and the fourth inductor L_{g2B} is wound around the second center leg CL51.

Optionally, in one embodiment of the disclosure, the fifth core C5 is implemented using high Bsat material.

Optionally, in one embodiment of the disclosure, the first core C1 includes a center leg CL1, a top yoke TY1, a bottom yoke BY1, and a side leg SL1 connected to the top yoke TY1 and the bottom yoke BY1, the second core C2 includes a center leg CL2, a top yoke TY2, a bottom yoke BY2, and a side leg SL2 connected to the top yoke TY2 and the bottom yoke BY2, wherein the fifth core C5 contacts the top yoke TY1 of the first core C1 and the top yoke TY2 of the second core C2, and wherein the top yokes TY1 and TY2 of the first core C1 and the second core C2 are integral part, the bottom yokes BY1 and BY2 of the first core C1 and the second core C2 are integral part, and the center legs CL1 and CL2 of the first core C1 and the second core C2 are disposed side by side and parallel to each other.

Optionally, in one embodiment of the disclosure, the first center leg CL51 of the fifth core C5 and the first core C1 are disposed co-axial, and wherein the second center leg CL52 of the fifth core C5 and the second core C2 are disposed co-axial.

Optionally, in one embodiment of the disclosure, a winding direction D1 of the third inductor L_{g1B}, the first inductor L_{g1A}, and the first branch inductor L_{b1} is opposite to a winding direction D2 of the fourth inductor L_{g2B}, the second inductor L_{g2A}, and the second branch inductor Lb2.

Optionally, in one embodiment of the disclosure, windings of the first inductor L_{g1A} and the first branch inductor L_{b1} are interleaved, and windings Lg21 of the second inductor L_{g2A} and windings Lb21 of the second branch inductor L_{b2} are interleaved.

In detail, FIG. 12(a) illustrates an example hybrid magnetic integration structure for implementing the embodiment described in connection with FIG. 11. The corresponding magnetic equivalent circuit is depicted in FIG. 12(b), and the detailed winding arrangement is shown in FIG. 12(c). In this structure, the first branch inductor L_{b1}, the second branch inductor L_{b2}, the first inductor L_{g1A}, and the second inductor L_{g2A} are wound on a HF magnetic core (such as ferrite), wherein the core reluctances (R_{g_core5} to R_{g_core8} and R_{g_core12} to R_{g_core18}) are sufficiently small and therefore neglected compared to the air gap reluctance R_{g_gap1} and R_{g_gap2}. The third inductor L_{g1B} and the fourth inductor L_{g2B} are wound on the same high-flux powder core (with a high Bsat), where the magnetic coupling coefficient is determined by the high-flux powder core reluctances (including R_{g_core1} to R_{g_core4}, R_{g_core9}, Rg _{_core11}, R_{g_Lg1B}, and R_{g_Lg2B}).

In detail, as shown in FIGS. 12(c)-(d), the first branch inductor L_{b1} and the first inductor L_{g1A} are wound together on the left core leg (center leg CL1) of the HF magnetic core (with air gaps AG), and second branch inductor L_{b2} and second inductor L_{g2A} are wound together on the right core leg (center leg CL2) of the HF magnetic core (also with air gaps AG), each with the same number of turns and in the same winding direction D1 or D2, respectively. To enhance magnetic coupling and meet mutual inductance M = L_{b}, winding techniques such as bifilar winding or sandwich winding can be employed. The winding direction D1 of the first branch inductor L_{b1} and the winding direction D2 of the second branch inductor L_{b2} (and likewise of the first inductor L_{g1A} and the second inductor L_{g2A}) are arranged oppositely to facilitate cancellation of LF flux components in the gapless side legs SL1 and SL2, thereby minimizing the volume required for the side legs. In some embodiments, to fully maximize flux cancellation and minimize the overall core volume, the high Bsat magnetic core (the fifth core C5) may be selected for coupled the third inductor L_{g1B} and the fourth inductor L_{g2B}, and physically overlaid with the HF magnetic core (the first core C1 and the second core C2), allowing shared utilization of the horizontal yoke (backplane or the top yoke TY1 and TY2). The winding directions of the third inductor L_{g1B} and the fourth inductor L_{g2B} are aligned with respective winding direction of the first inductor L_{g1A} and the second inductor L_{g2A} on the same side, respectively, ensuring cancellation of LF flux components within the shared backplane and further reducing its thickness and volume.

One embodiment of the disclosure aims to address these challenges by providing an efficient, compact, and cost-effective solution for achieving approximately zero or near-zero input current ripple in two-phase interleaved iTCM totem-pole PFC rectifiers. Through the optimization or design improvement of magnetic coupling between the (grid) inductors and branch inductors, as well as the introduction of integrated magnetic structures and the hybrid magnetic material usage, the solution of the embodiments can significantly reduce current ripple, improve or even minimize EMI noise, and the physical size of the components. As a result, the system achieves high power density, improved efficiency, and reduced electromagnetic interference, making it well-suited for high power density, high-performance power conversion applications.

One embodiment of the disclosure introduces a two-phase interleaved totem-pole power factor correction (PFC) rectifier that achieves approximately zero or near zero input current ripple. By improving or even optimizing the magnetic coupling between the (grid) and branch inductors (the first inductor L_{g1} coupled with the first branch inductor L_{b1} or the second inductor L_{g2} coupled with the second branch inductor L_{b2}), with the mutual inductance M matching the branch inductance L_{b}, the solution proposed by the disclosure nearly eliminates input current ripple. This significant reduction in ripple may improve or even minimize EMI noises and allow for a smaller differential-mode EMI filter. It also de-couples the (grid) inductance L_{g} design from current ripple constraints, enabling reduced inductance values and smaller component sizes.

Additionally, alternative embodiments are provided, where the (grid) inductors are divided into coupled and uncoupled components (e.g., first inductor L_{g1A}/ third inductor L_{g1B} and second inductor L_{g2A}/ fourth inductor L_{g2B}), allowing for the use of hybrid magnetic core materials to reduce or even minimize the total magnetic volume. Configurations are also proposed when existing EMI filter components, such as differential-mode inductors DM or leakage inductances of common-mode chokes CM, can be repurposed as uncoupled components, further reducing magnetic material volume.

One embodiment of the disclosure also proposes various magnetic integration structures to reduce or even minimize total magnetic core volume, including: a) an integrated design where the two pairs of coupled inductors (the first inductor L_{g1}/the first branch inductor L_{b1} and the second inductor L_{g2}/the second branch inductor L_{b2}) are wound on a single high-frequency magnetic core; b) hybrid magnetic structures combining high-frequency magnetic materials (such as ferrite) for coupled components and high-saturation-flux-density magnetic materials (such as high-flux powder and nanocrystalline) for uncoupled components; c) designs that leverage flux cancellation between windings to reduce core cross-sectional areas and overall magnetic volume; and d) the number of turns on each core leg is not restricted and may be any number. Each core leg may contain a single air gap or segmented air gaps having multiple smaller gaps. Furthermore, the cross-sectional shape of each core leg is not limited to a specific shape; it may be circular, elliptical, polygonal, or other various shapes.

Through these features, the embodiments of the disclosure achieve high efficiency, high power density, and superior EMI performance, making it well-suited for modern high-performance power conversion applications.

Compared to prior art, the disclosure addresses these challenges by proposing a rectifier featuring magnetic coupling condition and compact magnetic integration approaches, achieving approximately or nearly zero input current ripple, substantially reducing EMI noise, decreasing or even minimizing magnetic material usage, and greatly improving power density and overall system efficiency.

Although various embodiments of the present disclosure have been described in detail herein, one of ordinary skill in the art would readily appreciate modifications and other embodiments without departing from the spirit and scope of the present disclosure as stated in the appended claims.

## Claims

1. A rectifier (1), comprising:
an input end (P1);
an output capacitor (Cₒ);
a first high frequency (HF) bridge leg (B1), a second HF bridge leg (B2), and a line frequency (LF) bridge leg (B3) all connected to the output capacitor (Cₒ) in parallel;
a first inductor (L_{g1}) connected between the input end (P1) and a middle end (P2) of the first HF bridge leg (B1);
a second inductor (L_{g2}) connected between the input end (P1) and a middle end (P3) of the second HF bridge leg (B2);
a first branch inductor (L_{b1}) and a second branch inductor (L_{b2}) connected in series between the middle end (P2) of the first HF bridge leg (B1) and the middle end (P2) of the second HF bridge leg (B2);
a branch capacitor (C_{b}) connected between a middle end (P5) of the first branch inductor (L_{b1}) and the second branch inductor (L_{b2}) and a middle end (P4) of the LF bridge leg (B3);
a first core (C1) coupling between the first inductor (L_{g1}) and the first branch inductor (L_{b1}); and
a second core (C2) coupling between the second inductor (L_{g2}) and the second branch inductor (L_{b2}).

2. The rectifier according to claim 1, wherein the first core (C1) comprises a first center leg (CL11) and a second center leg (CL12) connected to the first center leg (CL11), the first inductor (L_{g1}) comprises a first sub-winding with Ng1 turns wound around the first center leg (CL11) and a second sub-winding with Ng2 turns wound around the second center leg (CL12), the first branch inductor (L_{b1}) comprises a first sub-branch winding with Nb1 turns wound around the first center leg (CL11) and a second sub-branch winding with Nb2 turns wound around the second center leg (CL12), wherein Ng1 is not equal to Ng2, and Nb1 is not equal to Nb2, and wherein the second core (C2) comprises a first center leg (CL21) and a second center leg (CL22) connected to the first center leg (CL21), the second inductor (L_{g2}) comprises a first sub-winding with Ng1 turns wound around the first center leg (CL21) of the second core (C2) and a second sub-winding with Ng2 turns wound around the second center leg (CL22) of the second core (C2), the second branch inductor (L_{b2}) comprises a first sub-branch winding with Nb1 turns wound around the first center leg (CL21) of the second core (C2) and a second sub-branch winding with Nb2 turns wound around the second center leg (CL22) of the second core (C2).

3. The rectifier according to claim 2, wherein the first center leg (CL11) of the first core (C1) and the first center leg (CL21) of the second core (C2) are disposed in a first axis, the second center leg (CL12) of the first core (C1) and the second center leg (CL22) of the second core (C2) are disposed in a second axis, and the first axis and the second axis are disposed side by side and parallel to each other.

4. The rectifier according to any one of the above claims, wherein a bottom yoke of the first core (C1) and a top yoke of the second core (C2) are integral part.

5. The rectifier according to any one of the above claims, wherein the first core (C1) further comprises a side leg, and the second core (C2) further comprises a side leg.

6. The rectifier according to any one of the above claims, wherein each one of the first center leg (CL11) of the first core (C1), the first center leg (CL21) of the second core (C2), the second center leg (CL12) of the first core (C1), and the second center leg (CL22) of the second core (C2) is provided with an air gap.

7. The rectifier according to any one of the above claims, wherein the first sub-winding of the first inductor (L_{g1}), the first sub-branch winding of the first branch inductor (L_{b1}), the first sub-winding of the second inductor (L_{g2}), and the first sub-branch winding of the second branch inductor (L_{b2}) have a first winding direction.

8. The rectifier according to claim 7, wherein the second sub-winding of the first inductor (L_{g1}), the second sub-branch winding of the first branch inductor (L_{b1}), the second sub-winding of the second inductor (L_{g2}), and the second sub-branch winding of the second branch inductor (L_{b2}) have a second winding direction opposite to the first winding direction.

9. The rectifier (2) according to any one of the above claims, further comprising a third inductor (L_{gB}) connected to the first inductor (L_{g1}) and the second inductor (L_{g2}), wherein an inductance of the first inductor (L_{g1}) is substantially equal to an inductance of the first branch inductor (L_{b1}), and an inductance of the second inductor (L_{g2}) is substantially equal to an inductance of the second branch inductor (L_{b2}).

10. The rectifier according to any one of the above claims, further comprising an electro-magnetic interference (EMI) filter connected between the input end (P1) and the middle end (P4) of the LF bridge leg (B3), wherein the EMI filter comprises a common-mode choke and a differential-mode inductor, a coupling factor of the common-mode choke is unity, and the differential-mode inductor is configured as a third inductor, or
the rectifier further comprising an electro-magnetic interference (EMI) filter connected between the input end (P1) and the middle end (P4) of the LF bridge leg (B3), wherein the EMI filter comprises a common-mode choke, a coupling factor of the common-mode choke is less than unity, and a leakage inductance of the common-mode choke is configured as a third inductor.

11. The rectifier according to any one of the above claims, further comprising a third core coupling to the third inductor, wherein the first core (C1) and the second core (C2) comprise low-loss magnetic material, and the third core comprises high saturation magnetic field material.

12. The rectifier according to claim 11, wherein the rectifier satisfies: a).the first core (C1) comprising a center leg, a top yoke, a bottom yoke, and a side leg connected to the top yoke and the bottom yoke, the second core (C2) comprising a center leg, a top yoke, a bottom yoke, and a side leg connected to the top yoke and the bottom yoke, wherein the top yokes of the first core (C1) and the second core (C2) are integral part, and the bottom yokes of the first core (C1) and the second core (C2) are integral part, and wherein the center legs of the first core (C1) and the second core (C2) are disposed side by side and parallel to each other; b). numbers of turns of winding of the first inductor (L_{g1}) and the first branch inductor (L_{b1}) are identical, and numbers of turns of winding of the second inductor (L_{g2}) and the second branch inductor (L_{b2}) are identical; c). windings of the first inductor (L_{g1}) and the first branch inductor (L_{b1}) are bifilar winding or sandwich winding, and windings of the second inductor (L_{g2}) and the second branch inductor (L_{b2}) are bifilar winding or sandwich winding; d). the first core (C1) comprising a center leg, a top yoke, a bottom yoke, and a side leg connected to the top yoke and the bottom yoke, the second core (C2) comprising a center leg, a top yoke, a bottom yoke, and a side leg connected to the top yoke and the bottom yoke, the bottom yoke of the first core (C1) and the top yoke of the second core (C2) are integral part, the center legs of the first core (C1) and the second core (C2) are disposed co-axial.

13. The rectifier (1) according to any one of the above claims, wherein a mutual inductance between the first inductor (L_{g1}) and the first branch inductor (L_{b1}) is substantially equal to an inductance (L_{b}) of the first branch inductor (L_{b1}), and a mutual inductance between the second inductor (L_{g2}) and the second branch inductor (L_{b2}) is substantially equal to an inductance (L_{b}) of the second branch inductor (L_{b2}).

14. The rectifier according to any one of the above claims, wherein the first HF bridge leg (B1) and the second HF bridge leg (B2) substantially are or close to 180° in phase, the first HF bridge leg (B1) comprises a first switch (S₁) and a second switch (S₂) connected in series and operated in complementary manner, and the second HF bridge leg (B2) comprises a third switch (S₃) and a fourth switch (S₄) connected in series and operated in complementary manner, wherein the LF bridge leg (B3) comprises two switches (M₁, M₂) connected in series and operated in complementary manner.

15. The rectifier according to any one of the above claims, wherein the first core (C1) and the second core (C2) comprise low-loss magnetic material.
